(19) Europäisches Patentamt
European Patent Office
Office européen des brevets

(11) **EP 3 913 917 B1**

(12) **EUROPEAN PATENT SPECIFICATION**

(45) Date of publication and mention
of the grant of the patent:
**01.05.2024 Bulletin 2024/18**

(21) Application number: **20769784.8**

(22) Date of filing: **09.03.2020**

(51) International Patent Classification (IPC):
*H04N 19/13* (2014.01)     *H04N 19/103* (2014.01)
*H04N 19/159* (2014.01)

(52) Cooperative Patent Classification (CPC):
**H04N 19/91; H04N 19/12; H04N 19/176**

(86) International application number:
**PCT/CN2020/078486**

(87) International publication number:
**WO 2020/182102 (17.09.2020 Gazette 2020/38)**

(54) **METHODS FOR PERFORMING ENCODING AND DECODING, DECODING END AND ENCODING END**

CODIERUNGS- UND DECODIERUNGSVERFAHREN, DECODIERUNGSENDE UND
CODIERUNGSENDE

PROCÉDÉS DE RÉALISATION DE CODAGE ET DE DÉCODAGE, EXTRÉMITÉ DE DÉCODAGE ET
EXTRÉMITÉ DE CODAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2019 CN 201910177580**

(43) Date of publication of application:
**24.11.2021 Bulletin 2021/47**

(73) Proprietor: **Hangzhou Hikvision Digital
Technology Co., Ltd.
Hangzhou, Zhejiang 310051 (CN)**

(72) Inventors:
• **CAO, Xiaoqiang**
**Hangzhou, Zhejiang 310051 (CN)**
• **CHEN, Fangdong**
**Hangzhou, Zhejiang 310051 (CN)**
• **WANG, Li**
**Hangzhou, Zhejiang 310051 (CN)**

(74) Representative: **Yang, Shu
Withers & Rogers LLP
2 London Bridge
London SE1 9RA (GB)**

(56) References cited:
**WO-A1-2018/013953     WO-A1-2018/035127**

WO-A1-2019/009584     CN-A- 109 089 117
CN-A- 109 417 636     CN-A- 110 708 550

• BROSS (FRAUNHOFER) B ET AL: "Non-CE8:
Unified Transform Type Signalling and Residual
Coding for Transform Skip", 13. JVET MEETING;
20190109 - 20190118; MARRAKECH; (THE JOINT
VIDEO EXPLORATION TEAM OF ISO/IEC
JTC1/SC29/WG11 AND ITU-T SG.16 ), , no.
JVET-M0464 3 January 2019 (2019-01-03),
XP030200509, Retrieved from the Internet:
URL:http://phenix.int-evry.fr/jvet/doc_end
_user/documents/13_Marrakech/wg11/JVET-M0
4 64-v1.zip JVET-M0464.docx [retrieved on
2019-01-03]
• CHUBACH O ET AL: "CE6-related: Context
modelling for signalling MTS index", 15. JVET
MEETING; 20190703 - 20190712; GOTHENBURG;
(THE JOINT VIDEO EXPLORATION TEAM OF
ISO/IEC JTC1/SC29/WG11 AND ITU-T SG.16 ), ,
no. JVET-O0294 ; m48404 26 June 2019
(2019-06-26), XP030219158, Retrieved from the
Internet:
URL:http://phenix.int-evry.fr/jvet/doc_end
_user/documents/15_Gothenburg/wg11/JVET-O
0 294-v1.zip JVET-O0294-v1.docx [retrieved on
2019-06-26]

- LIN, Yongbing et al.: "Simplified Multiple-Core Transform for Intra Residual Coding", Joint Video Exploration Team (JVET) of ITU-T SG 16 WP 3 and ISO/IEC JTC 1/SC 29/WG 11, 11th Meeting: Ljubljana, SI, 10 18 Jul. 2018, Document: JVET-K0126_r2, 18 July 2018 (2018-07-18), XP030199729,
- CAO (HIKVISION) X ET AL: "Non-CE6: Simplification on MTS index coding", 127. MPEG MEETING; 20190708 - 20190712; GOTHENBURG; (MOTION PICTURE EXPERT GROUP OR ISO/IEC JTC1/SC29/WG11), , no. m48499 ; JVET-O0380 26 June 2019 (2019-06-26), XP030222095, Retrieved from the Internet: URL:http://phenix.int-evry.fr/mpeg/doc_end_user/documents/127_Gothenburg/wg11/m48499 -JVET-O0380-v1-JVET-O0380.zip JVET-O0380/JVET-O0380-v1.docx [retrieved on 2019-06-26]
- LIN, Yongbing et al.: "Simplified Multiple-Core Transform for Intra Residual Coding", Joint Video Exploration Team (JVET) of ITU-T SG 16 WP 3 and ISO/IEC JTC 1/SC 29/WG 11, 11th Meeting:

**Description**

**TECHNICAL FIELD**

The present disclosure relates to the field of audio and video technologies, and in particular, relates to coding and decoding methods, a coder and decoder, and storage mediums.

**BACKGROUND**

With the development of Internet technologies and computer technologies, more and more video applications are being developed, and users' demands for high-definition videos in the video applications are increasing. However, because a high-definition video generally contains a large amount of data, before transmission in a limited network bandwidth, the high-definition video needs to be coded. Data coding generally includes: intra prediction (or inter prediction), transform, quantization, entropy coding, in-loop filtering, and the like. During coding, a residual block, which may be referred to as a transform unit (TU) or a residual signal of a current block, is acquired by intra prediction, and a transform coefficient is acquired by transforming the TU (the transform refers to conversion of an image depicted in the form of pixels in a spatial domain to an image expressed in the form of the transform coefficient in a transform domain). Afterwards, coded data is acquired by performing quantization and entropy coding on the transform coefficient.

"Non-CE8: Unified Transform Type Signalling and Residual Coding for Transform Skip" (Bross et al., JVET Marrakech meeting, 9-01-2019) discloses the coding of mts index. It also discloses two modifications related to transform type signalling and residual coding for transform skip. The first modification includes aligning the cases in which transform skip (TS) and multiple transform selection (MTS) apply. This limits TS to luma transform blocks as well as extends it to transform block sizes up to 32x32. The second modification constitutes of a modified transform coefficient level coding for the TS residual.

**SUMMARY**

Embodiments of the present disclosure provide coding and decoding methods, a coder and decoder, and storage mediums. The invention is set out in the appended set of claims.

According to an aspect of embodiments of the present disclosure, a decoding method is provided. The decoding method includes:

> acquiring coded data of a current block;
> determining that a height and a width of the current block are both less than or equal to a preset threshold and the current block is a luma block;
> acquiring a transform pair index corresponding to the current block from the coded data, wherein in the case that the transform pair index includes five index values, a transform pair mapped by the transform pair index is (DCT2, DCT2) in response to the index value of the transform pair index being a first index value; the transform pair mapped by the transform pair index is (DST7, DST7) in response to the index value of the transform pair index being a second index value; the transform pair mapped by the transform pair index is (DCT8, DST7) in response to the index value of the transform pair index being a third index value; the transform pair as mapped by the transform pair index is (DST7, DCT8) in response to the index value of the transform pair index being a fourth index value; and the transform pair mapped by the transform pair index is (DCT8, DCT8) in response to the index value of the transform pair index being a fifth index value; wherein a binarized codeword corresponding to the transform pair index occupies at most four bits and a first bit of the binarized codeword corresponding to the transform pair index is intended to indicate whether the transform pair mapped by the first index value is selected, wherein the transform pair (DCT2, DCT2) mapped by the first index value is selected in response to a value of the first bit being a first value, and the transform pair mapped by one of the remaining index values is selected in response to the value of the first bit being a second value; and wherein the first value is 0 and the second value is 1, the first bit of the binarized codeword corresponding to the transform pair index is decoded by context-based adaptive binary arithmetic coding based on one context model other bits are decoded by context-based adaptive binary arithmetic coding (CABAC) in response to the binarized codeword corresponding to the transform pair index further comprising the other bits in addition to the first bit; and
> determining the transform pair corresponding to the current block based on the transform pair index, wherein the transform pair includes a horizontal transform kernel and a vertical transform kernel.

In some embodiments, determining the transform pair corresponding to the current block based on the transform pair index includes: determining, based on the transform pair index corresponding to the current block and a preconfigured corresponding relationship between the transform pair index and the transform pair, the transform pair corresponding to the current block, wherein the corresponding relationship includes a mapping relationship between five index values of the transform pair index and five transform pairs.

In some embodiments, in response to the value of the first bit being the second value, the first bit is intended to indicate that the transform pair mapped by one of the remaining index values is selected, the transform pair mapped by one of the remaining index values being one of four transform pairs (DST7, DST7), (DCT8, DST7), (DST7, DCT8), and (DCT8, DCT8); wherein

> a value of a second bit of the binarized codeword is intended to identify whether the transform pair selected by the current block is (DST7, DST7) or one of (DCT8, DST7), (DST7, DCT8), and (DCT8 DCT8);
> a value of a third bit of the binarized codeword is intended to identify whether the transform pair selected by the current block is (DCT8, DST7) or one of (DST7, DCT8) and (DCT8, DCT8); and
> a value of a fourth bit of the binarized codeword is intended to identify whether the transform pair selected by the current block is (DST7, DCT8) or (DCT8, DCT8).

In some embodiments, determining the transform pair corresponding to the current block based on the transform pair index includes:

> determining that the transform pair corresponding to the current block is (DCT2, DCT2) in response to the first bit being 0;
> determining that the transform pair corresponding to the current block is (DST7, DST7) in response to the first bit being 1 and a second bit being 0;
> determining that the transform pair corresponding to the current block is (DCT8, DST7) in response to the first bit being 1, the second bit being 1, and a third bit being 0;
> determining that the transform pair corresponding to the current block is (DST7, DCT8) in response to the first bit being 1, the second bit being 1, the third bit being 1, and a fourth bit being 0; and
> determining that the transform pair corresponding to the current block is (DCT8, DCT8) in response to the first bit being 1, the second bit being 1, the third bit being 1, and the fourth bit being 1.

In some embodiments, prior to acquiring the transform pair index corresponding to the current block from the coded data, the decoding method further includes:
identifying whether the coded data from a coding device carries a target flag, wherein the target flag is intended to indicate that explicit multi-kernel transform is enabled.

In some embodiments, acquiring the transform pair index corresponding to the current block from the coded data includes: acquiring the transform pair index corresponding to the current block from the coded data in response to determining that the current block is the luma block and the height and the width of the current block are both less than or equal to 32.

In some embodiments, the decoding method further includes: directly determining, instead of decoding the transform pair index corresponding to the current block, (DCT2, DCT2) as the transform pair selected by the current block in response to determining that the current block is not the luma block or the height or width of the current block is greater than 32.

In some embodiments, the first value of the first bit of the binarized codeword corresponding to the transform pair index is 0, and the second value of the first bit of the binarized codeword corresponding to the transform pair index is 1.

In some embodiments, the binarized codeword of the first index value is 0; the binarized codeword of the second index value is 10; the binarized codeword of the third index value is 110; the binarized codeword of the fourth index value is 1110; and the binarized codeword of the fifth index value is 1111.

In some embodiments, acquiring the coded data of the current block includes: acquiring inversely quantized data of the current block by performing entropy decoding on the coded data and performing inverse quantization on an entropy decoding result.

In some embodiments, in response to determining the transform pair corresponding to the current block, the decoding method further includes: acquiring a residual signal corresponding to the current block by performing reverse transform processing on inversely quantized data of the current block with the transform pair, and then acquiring reconstruction information corresponding to the current block by adding the residual signal and a prediction signal.

In some embodiments, the current block is a transform unit, and the current block is a coding unit acquired by partitioning a coding tree unit using one or more of quad-tree partitioning, horizontal binary-tree partitioning, vertical binary-tree partitioning, horizontal triple-tree partitioning and vertical triple-tree partitioning.

In some embodiments, the current block is a transform unit whose width is greater than its height, or the current block is a transform unit whose width is equal to its height, or the current block is a transform unit whose width is less than its height.

According to another aspect of embodiments of the present disclosure, a coding method is provided. The coding method includes:

determining that a height and a width of a current block are both less than or equal to a preset threshold and the current block is a luma block;

determining a transform pair corresponding to the current block and a transform pair index corresponding to the current block, wherein in the case that the transform pair index includes five index values, the transform pair mapped by the transform pair index is (DCT2, DCT2) in response to the index value of the transform pair index being a first index value; the transform pair mapped by the transform pair index is (DST7, DST7) in response to the index value of the transform pair index being a second index value; the transform pair mapped by the transform pair index is (DCT8, DST7) in response to the index value of the transform pair index being a third index value; the transform pair mapped by the transform pair index is (DST7, DCT8) in response to the index value of the transform pair index being a fourth index value; and the transform pair mapped by the transform pair index is (DCT8, DCT8) in response to the index value of the transform pair index being a fifth index value; and wherein a binarized codeword corresponding to the transform pair index occupies at most four bits and a first bit of the binarized codeword corresponding to the transform pair index is intended to indicate whether the transform pair mapped by the first index value is selected, wherein the transform pair (DCT2, DCT2) mapped by the first index value is selected in response to a value of the first bit being a first value, and the transform pair mapped by one of the remaining index values is selected in response to the value of the first bit being a second value, the first value is 0 and the second value is 1; and coding the transform pair index by subjecting the first bit of the binarized codeword corresponding to the transform pair index to context-based adaptive binary arithmetic coding based on one context model, and subjecting other bits of the binarized codeword corresponding to the transform pair index to context-based adaptive binary arithmetic coding based on one context model in response to the binarized codeword corresponding to the transform pair index further comprising the other bits in addition to the first bit, and adding the transform pair index as coded to coded data of the current block.

In some embodiments, determining the transform pair corresponding to the current block and the transform pair index corresponding to the current block includes: determining the transform pair corresponding to the current block; and determining, based on the transform pair and a preconfigured corresponding relationship between the transform pair index and the transform pair, the transform pair index corresponding to the current block, wherein the corresponding relationship includes a mapping relationship between five index values of the transform pair index and five transform pairs.

In some embodiments, in response to the value of the first bit being the second value, the first bit is intended to indicate that the transform pair mapped by one of the remaining index values is selected, the transform pair mapped by one of the remaining index values being one of four transform pairs (DST7, DST7), (DCT8, DST7), (DST7, DCT8), and (DCT8, DCT8); wherein

a value of a second bit of the binarized codeword is intended to identify whether the transform pair selected by the current block is (DST7, DST7) or one of (DCT8, DST7), (DST7, DCT8) and (DCT8 DCT8);

a value of a third bit of the binarized codeword is intended to identify whether the transform pair selected by the current block is (DCT8, DST7) or one of (DST7, DCT8) and (DCT8, DCT8); and

a value of a fourth bit of the binarized codeword is intended to identify whether the transform pair selected by the current block is (DST7, DCT8) or (DCT8, DCT8).

In some embodiments, the first bit of the binarized codeword is 0 in response to the transform pair corresponding to the current block being (DCT2, DCT2); the first bit of the binarized codeword is 1 and the second bit is 0 in response to the transform pair corresponding to the current block being (DST7, DST7); the first bit of the binarized codeword is 1, the second bit is 1, and the third bit is 0 in response to the transform pair corresponding to the current block being (DCT8, DST7); the first bit of the binarized codeword is 1, the second bit is 1, the third bit is 1, and the fourth bit is 0 in response to the transform pair corresponding to the current block being (DST7, DCT8); and the first bit of the binarized codeword is 1, the second bit is 1, the third bit is 1, and the fourth bit is 1 in response to the transform pair corresponding to the current block being (DCT8, DCT8).

In some embodiments, the coding method further includes: adding a target flag to the coded data, wherein the target flag is intended to indicate that explicit multi-kernel transform is enabled.

In some embodiments, determining the transform pair corresponding to the current block and the transform pair index corresponding to the current block includes: determining the transform pair corresponding to the current block and the transform pair index corresponding to the current block in response to determining that the current block is the luma block and the height and the width of the current block are both less than or equal to 32.

In some embodiments, the coding method further includes: directly determining, instead of coding the transform pair index corresponding to the current block, (DCT2, DCT2) as the transform pair selected by the current block, in response to determining that the current block is not the luma block or the height or width of the current block is greater than 32.

In some embodiments, the first value of the first bit of the binarized codeword corresponding to the transform pair index is 0, and the second value of the first bit of the binarized codeword corresponding to the transform pair index is 1.

In some embodiments, the binarized codeword of the first index value is 0; the binarized codeword of the second index value is 10; the binarized codeword of the third index value is 110; the binarized codeword of the fourth index value is 1110; and the binarized codeword of the fifth index value is 1111.

In some embodiments, the coding method further includes: coding other bits by context-based adaptive binary arithmetic coding (CABAC) in response to the binarized codeword corresponding to the transform pair index further including the other bits in addition to the first bit.

In some embodiments, the coding method further includes: acquiring a transform coefficient by transforming the current block based on the transform pair, acquiring a quantization coefficient by quantizing the transform coefficient, and acquiring the coded data corresponding to the current block by performing entropy coding on the quantization coefficient.

In some embodiments, in response to determining the transform pair corresponding to the current block, the coding method further includes: acquiring a transform coefficient by transforming a residual signal of the current block based on the transform pair, acquiring a quantization coefficient by quantizing the transform coefficient, and acquiring the coded data corresponding to the current block by performing entropy coding on the quantization coefficient; and adding the transform pair index as coded to the coded data.

In some embodiments, the current block is a transform unit, and the current block is a coding unit acquired by partitioning a coding tree unit using one or more of quad-tree partitioning, horizontal binary-tree partitioning, vertical binary-tree partitioning, horizontal triple-tree partitioning and vertical triple-tree partitioning.

In some embodiments, the current block is a transform unit whose width is greater than its height, or the current block is a transform unit whose width is equal to its height, or the current block is a transform unit whose width is less than its height.

According to another aspect of embodiments of the present disclosure, a decoder is provided. The decoder includes: a processor and a memory storing at least one instruction executable by the processor; wherein the processor, when loading and executing the at least one instruction, is caused to perform the decoding method according to any one of the aforesaid embodiments.

According to another aspect of embodiments of the present disclosure, a coder is provided. The coder includes: a processor and a memory storing at least one instruction executable by the processor; wherein the processor, when loading and executing the at least one instruction, is caused to perform the coding method according to any one of the aforesaid embodiments.

According to another aspect of embodiments of the present disclosure, a decoding device is provided. The decoding device is configured to perform the decoding method according to any one of the aforesaid embodiments.

According to another aspect of embodiments of the present disclosure, a coding device is provided. The coding device is configured to perform the coding method according to any one of the aforesaid embodiments.

According to another aspect of embodiments of the present disclosure, a non-transitory computer-readable storage medium, storing at least one instruction executable by a processor; wherein the at least one instruction, when loaded and executed by the processor, causes the processor to perform the decoding method according to any one of the aforesaid embodiments or the coding method according to any one of the aforesaid embodiments.

**BRIEF DESCRIPTION OF THE DRAWINGS**

FIG. 1 is a diagram showing partition types of a block according to an embodiment of the present disclosure;
FIG. 2 is a diagram showing that a CTU is partitioned into CUs according to an embodiment of the present disclosure;
FIG. 3 is a diagram showing three commonly-used blocks according to an embodiment of the present disclosure;
FIG. 4 is a diagram of a direction when intra prediction is performed according to an embodiment of the present disclosure;
FIG. 5 is a diagram of coding according to an embodiment of the present disclosure;
FIG. 6 is a diagram of a distributed signal according to an embodiment of the present disclosure;
FIG. 7 is a diagram of residual signal distribution according to an embodiment of the present disclosure;
FIG. 8 is a flowchart of a coding method according to an embodiment of the present disclosure;
FIG. 9 is a flowchart of a decoding method according to an embodiment of the present disclosure;

FIG. 10 is a flowchart of another coding method according to an embodiment of the present disclosure;

FIG. 11 is a flowchart of another decoding method according to an embodiment of the present disclosure;

FIG. 12 is a flowchart of still another coding method according to an embodiment of the present disclosure;

FIG. 13 is a flowchart of still another decoding method according to an embodiment of the present disclosure;

FIG. 14 is a structural diagram of a decoding device according to an embodiment of the present disclosure;

FIG. 15 is a structural diagram of a coding device according to an embodiment of the present disclosure;

FIG. 16 is a structural diagram of another decoding device according to an embodiment of the present disclosure;

FIG. 17 is a structural diagram of another coding device according to an embodiment of the present disclosure;

FIG. 18 is a structural diagram of still another decoding device according to an embodiment of the present disclosure;

FIG. 19 is a structural diagram of still another coding device according to an embodiment of the present disclosure;

FIG. 20 is a structural diagram of yet still another coding device according to an embodiment of the present disclosure; and

FIG. 21 is a structural diagram of yet still another decoding device according to an embodiment of the present disclosure.

## DETAILED DESCRIPTION

For clearer descriptions of the objectives, technical solutions and advantages in the present disclosure, the embodiments of the present disclosure are described in further detail hereinafter with reference to the accompanying drawings.

In the related art, during transform, the transform coefficient is generally acquired by transforming the TU using a preset transform pair (the transform pair includes a horizontal transform kernel and a vertical transform kernel). Correspondingly, during decoding, the residual signal is acquired by inverse transforming the TU using the preset transform pair used during coding.

In this way, as significantly different compression effects are achieved when the same TU is transformed using different transform pairs, poor coding and decoding performance may be caused when all the TUs are transformed using the same preset transform pair.

The present disclosure provides a coding method and a decoding method. The coding method may be performed by a coding device. The decoding method may be performed a decoding device. Further, the coding device or the decoding device may be a device capable of coding and/or decoding video data, such as a server, a computer, or a mobile phone.

A processor, a memory, a transceiver, and the like may be disposed in the coding device or the decoding device. The processor may be configured to code and/or decode data. The memory may be configured to store data required for and data generated in a coding and/or decoding process. The transceiver may be configured to receive and transmit data, for example, to acquire the video data.

Concepts possibly involved in the embodiments of the present disclosure are explained first before the embodiments are described.

Transform kernel

In video coding, transform is an indispensable phase for video data compression, and enables energy of signals to be more concentrated. In addition, a transform technique based on discrete cosine transform (DCT)/discrete sine transform (DST) has been a mainstream transform technique of video coding. Each of the DCT and the DST specifically includes a plurality of transform kernels based on different basis functions. The basis functions of three commonly-used transform kernels are given in Table 1.

Table 1

| Transform Kernel Type | Basis Function T $(j)$, $i, j = 0,1, ..., N$ -1 |
|---|---|
| DCT2 | $$T_i(j) = \omega_0 \cdot \sqrt{\frac{2}{N}} \cdot \cos\left(\frac{\pi \cdot i \cdot (2j+1)}{2N}\right), \quad \text{wherein}$$ |

(continued)

| Transform Kernel Type | Basis Function T $(j)$, $i, j = 0,1, ..., N-1$ |
|---|---|
| | $$\omega_0 = \begin{cases} 1, i \neq 0 \\ \sqrt{\dfrac{2}{N}} \end{cases}, i = 0$$ |
| DCT8 | $$T_i(j) = \sqrt{\dfrac{4}{2N+1}} \cdot \cos\left(\dfrac{\pi \cdot (2i+1) \cdot (2j+1)}{4N+2}\right)$$ |
| DST7 | $$T_i(j) = \sqrt{\dfrac{4}{2N+1}} \cdot \sin\left(\dfrac{\pi \cdot (2i+1) \cdot (j+1)}{2N+1}\right)$$ |

Forward transform and inverse transform

In video coding, a transform process includes a forward transform and an inverse transform, which are also referred to as a forward transform and a backward transform. Forward transform means that a two-dimensional residual signal (a residual coefficient) is converted to a two-dimensional spectrum signal (a transform coefficient) with energy more concentrated and then the transform coefficient is quantized, such that a high-frequency component is effectively removed and intermediate-frequency and low-frequency components are retained, thereby achieving the effect of compression. It is expressed in a matrix as formula (1):

$$F = B \cdot f \cdot A^T \qquad (1),$$

wherein M represents a width of a residual block, N represents a height of the residual block, f represents an original residual signal of N*M dimensions, and F represents a frequency-domain signal of N*M dimensions. A and B represent an M*M-dimensional transform matrix and an N*N-dimensional transform matrix respectively, both of which satisfy orthogonality.

Inverse transform, also called reverse transform, is an inverse process of forward transform. That is, the frequency-domain signal F is converted to a time-domain residual signal f by orthogonal transform matrices A and B. It is expressed in a matrix as formula (2):

$$f = B^T \cdot F \cdot A \qquad (2).$$

Horizontal transform and vertical transform:

In a transform phase of video coding, a two-dimensional residual signal is input. As shown in formula (3), if $X = A \cdot f^T$, $F = B \cdot X^T$.

$$F = B \cdot f \cdot A^T = B \cdot \left(A \cdot f^T\right)^T \qquad (3).$$

Therefore, the forward transform of one two-dimensional residual signal is realized by one-dimensional forward transform twice. Upon the first forward transform, an M*N signal X is acquired and a correlation between pixels in a horizontal direction of the two-dimensional residual signal is canceled. Therefore, the first forward transform is referred to as a horizontal transform, and A is referred to as a horizontal transform matrix. Upon the second forward transform, a correlation between pixels in a vertical direction of the two-dimensional residual signal is canceled. Therefore, the second forward transform is referred to as a vertical transform, and B is referred to as a vertical transform matrix.

Transform pair

In a next-generation video coding standard, a transform unit (TU) may be a rectangular block. Therefore, M is not necessarily equal to N, and thus the dimensions of A and B are not necessarily equal. In addition, the next-generation video coding standard supports that A and B are not transform matrices produced by the same transform kernel. Thus, there is a transform pair {H, V} composed of transform kernels corresponding to A and B respectively in the transform, where H is referred to as a horizontal transform kernel and V is referred to as a vertical transform kernel.

Block partition

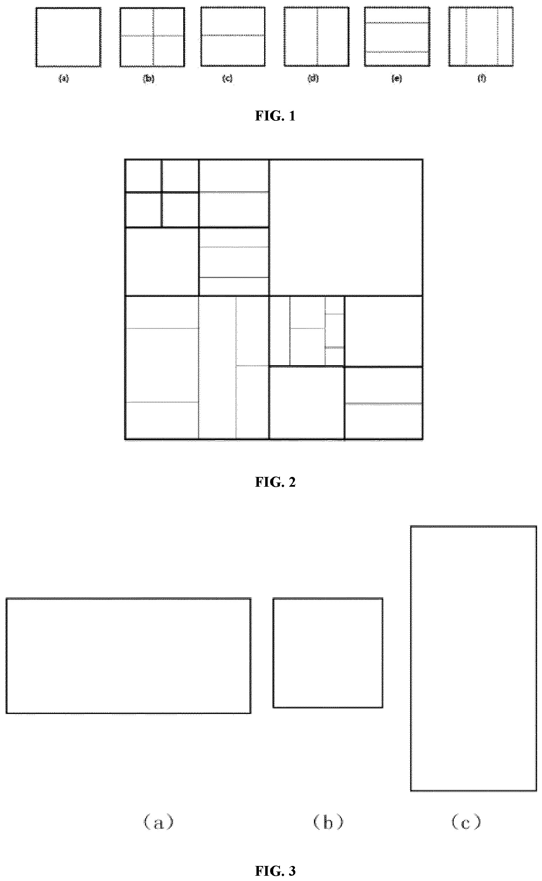

In high-efficiency video coding (HEVC), a 64*64 coding tree unit (CTU) is recursively partitioned into coding units (CU) using a quadtree. Whether to use intra-frame coding or inter-frame coding is determined at a leaf node CU level. The CU is further partitioned into two or four prediction units (PU), and the same prediction information is used in the same PU. After a residual signal is acquired upon completion of prediction, one CU is further partitioned into a plurality of TUs using the quad-tree.
However, in newly-proposed versatile video coding (WC), a block partition technology has changed greatly. An original partition mode is replaced with a binary-tree/triple-tree/quad-tree (BT/TT/QT)) hybrid partition structure, the original concepts of CU, PU, and TU are canceled, and a more flexible partition mode of the CU is supported. The CU is subjected to square or rectangular partitioning. The CTU is firstly subjected to quad-tree partitioning, and then each of leaf nodes acquired from quad-tree partitioning is further subjected to binary-tree partitioning and triple-tree partitioning. That is, totally five partitioning schemes are available: quad-tree partitioning, horizontal binary-tree partitioning, vertical binary-tree partitioning, horizontal triple-tree partitioning and vertical triple-tree partitioning, as shown in FIG. 1, which shows the five partitioning schemes. In FIG. 1, (a) represents no partitioning, (b) represents quad-tree partitioning, (c) represents horizontal binary-tree partitioning, (d) represents vertical binary-tree partitioning, (e) represents horizontal triple-tree partitioning and (f) represents vertical triple-tree partitioning. As shown in FIG. 2, an exemplary diagram showing that one CTU is partitioned into CUs is provided.
Therefore, based on the partition schemes, the block usually has three shapes as shown in FIG. 3. In FIG. 3, (a) represents a block whose width is greater than its height, (b) represents a block whose width is equal to its height, and (c) represents a block whose width is smaller than its height.

Intra prediction

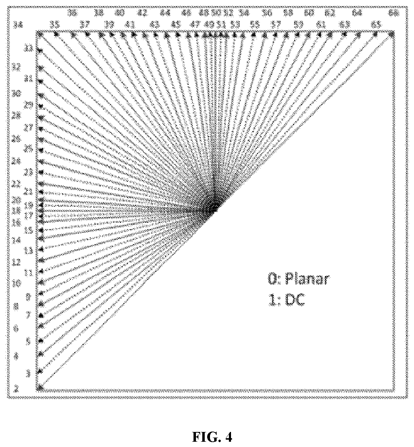

Intra prediction means that considering a strong spatial-domain correlation between adjacent blocks in an image, a currently uncoded block is predicted by using surrounding pixels, which have been reconstructed, as reference pixels. Therefore, only a residual signal (an original signal - a prediction signal) needs to be subjected to subsequent coding, instead of coding the original signal. In this way, the spatial-domain redundancy is effectively removed and the compression efficiency of a video signal is greatly improved. In addition, in intra prediction, more densely arranged angles achieve better the prediction effects. FIG. 4 shows a diagram of angular directions when intra prediction is performed in 67 intra prediction modes given by WC, wherein the number of intra prediction modes is increased to 65 from 33 of HEVC. A mode number 0 indicates a planar mode; a mode number 1 indicates s a DC mode (the DC mode means that predicted pixels of the current block are the average of reference pixels), black solid lines represent the angular directions (2, 4, 6, 8, 64, 66) of original HEVC, and dashed lines represent added angular directions (3, 5, 7, 9, 63, 65). With the denser angular directions, boundaries of any direction in a natural video may be more effectively captured, and more reference information may be used for rate-distortion cost selection, such that a more suitable intra prediction mode is found to predict the current block more accurately. Thus, a prediction block is closer to the original block, and fewer bits need to be transmitted for coding the current block, achieving higher coding performance. When intra prediction coding is performed, these 67 intra-frame modes are applied to coded blocks of all sizes, including a luma component and a chroma component.
In FIG. 4, where the mode number of the intra prediction mode is 2 to 34, an angle between an angular direction and a horizontal rightward direction is -45 degrees to 45 degrees; and where the mode number of the intra prediction mode is 35 to 66, the angle between the angular direction and the horizontal rightward direction is -135 degrees to 45 degrees.
It should be noted that in a plane rectangular coordinate system, the horizontal rightward direction is a positive direction of the x-axis, and a vertical upward direction is a positive direction of the y-axis. In this way, an angle formed by a ray with the origin as a vertex (the ray is in a direction distal from the origin) in each of a first quadrant and a second quadrant and the positive direction of the x-axis is a positive, and an angle formed by a ray with the origin as a vertex (the ray is in the direction distal from the origin) in each of a third quadrant and a fourth quadrant and the positive direction of the x-axis is negative. For example, an angle between the horizontal rightward direction and the axis of symmetry (in the direction distal from the origin) in the fourth quadrant is -45 degrees.

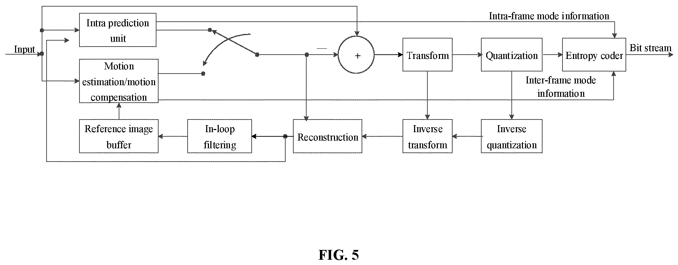

An embodiment of the present disclosure provides a common coding frame. As shown in FIG. 5, a complete video coding method generally includes prediction, transform, quantization, entropy coding, in-loop filtering and the like. The prediction specifically includes intra prediction and inter prediction. The intra prediction means that considering a strong spatial-domain correlation between adjacent blocks in an image, a currently uncoded block is predicted by using surrounding pixels, which have been reconstructed, as reference pixels. Therefore, only a residual signal (an original signal - a prediction signal) needs to be subjected to subsequent coding, instead of coding the original signal. As a result, the spatial-domain redundancy is effectively removed and the compression efficiency of a video signal is greatly improved. The inter prediction means that by using a time-domain correlation of video signals, pixels of a current image are predicted with pixels of an adjacent coded image to achieve the purpose of removing the time-domain redundancy of a video. In inter prediction, due to a strong time-domain correlation of videos, that is, two frames of images adjacent in the time domain have many similar image blocks, the image blocks of the current frame are often subjected to motion search in the adjacent reference image to find a block that best matches the current block as a reference block. Due to a high similarity and a very small difference value between the reference block and the current block, the bit rate overhead of coding the difference value is usually much lower than the bit rate overhead caused by directly coding the pixel value of the current block.

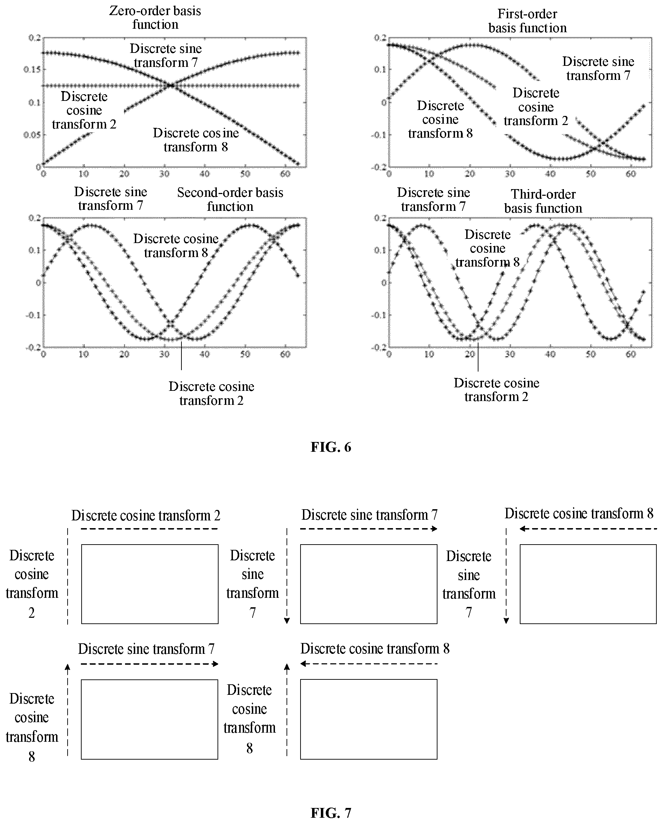

In the transform process, for the same TU (which may also be referred to as a residual block or a current block), when different transform pairs are used to compress the residual block, the compression effects are quite different. This is determined by a basis function of the transform kernel itself. As shown in FIG. 6, corresponding to the basis functions of three transform kernels, i.e., DCT2, DST7, and DCT8, input signal bits are 64 points. It can be seen from a zero-order basis function in the figure that DCT2 has a relatively stronger energy concentration effect on uniformly distributed signals, and a direct current component formed is a multiple of the average value of the input signals. DST7 has a relatively stronger energy concentration effect on input signals with ascending amplitudes. DCT8 has a relatively stronger energy concentration effect on input signals with descending amplitudes.

For more intuitively experiencing relationships between different transform kernels and residual properties, as shown in FIG. 7, five different horizontal and vertical transform pairs represent different types of residual distribution. The transform kernel type {DCT2, DCT2} represents that the residual of the TU is uniformly distributed, and the transform kernel type {DST7, DST7} represents that the residual distribution of the TU increases sequentially from left to right and from top to bottom, and that the residual of the TU is mainly distributed at the lower right corner of the TU. Similarly, {DCT8, DST7} represents that the residual is mainly distributed at the lower left corner of the TU, {DST7, DCT8} represents that the residual is mainly distributed at the upper right corner of the TU, and {DCT8, DCT8} represents that the residual is mainly distributed at the upper left corner of the TU.

The context model refers to a process of updating a symbol probability based on a context in video coding.

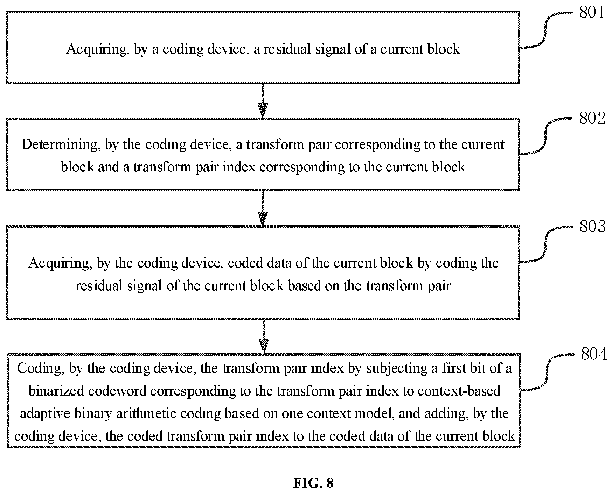

An embodiment of the present disclosure provides a coding method. A flow of this method may be as shown in FIG. 8.

In step 801, a coding device acquires a residual signal of a current block.

In practice, where coding video data, the coding device firstly performs intra prediction to acquire the residual signal (a fashion in which a residual block is acquired is identical with that in the existing video coding standard and is not repeatedly described here), and then takes the residual signal as a residual signal of the current block to be processed currently.

A fashion in which an intra prediction mode is selected may be as follows.

Generally, two major indexes are available for evaluating coding efficiency: the bit rate and the peak signal-to-noise ratio (PSNR). Generally, the smaller the bit stream is, the higher the compression rate is; and the higher the PSNR is, the better the quality of a reconstructed image is. When the mode is selected, a discriminant formula is essentially a comprehensive evaluation of these two indexes.

The rate-distortion cost corresponding to the mode is J (mode) = D + $\lambda$*R, wherein D represents distortion which is usually measured by a sum of squares error (SSE) index, the SSE refers to a mean sum of square of a difference value between a reconstructed block and a source image, $\lambda$ is the Lagrangian multiplier, and R is the actual number of bits required for coding the image block in the intra prediction mode, including the sum of bits required for coding mode information, motion information, the residual signal and the like.

The coding device may acquire an explicit multi-kernel transform syntax table. As shown in Table 2, as long as one intra prediction mode is selected, each transform pair in Table 2 is selected for transform processing, quantization, entropy coding, and decoding. In this way, all the intra prediction modes are traversed, then the intra prediction mode and the transform pair, which achieve the lowest rate-distortion cost, are selected, and this intra prediction mode is determined as the intra prediction mode corresponding to the current block. In this way, the intra prediction mode and the transform pair which correspond to the current block may be determined. For example, 67 intra prediction modes are available, and five transform pairs are available for each of these intra prediction modes. Thus, 67*5 combinations are available, and each combination includes one intra prediction mode and one transform pair. The combination with the lowest rate-distortion cost is selected for final intra prediction and transform.

Table 2

| Transform Pair Index | Transform Pair | | Bits of Binarized Codeword | | | |
|---|---|---|---|---|---|---|
| | Horizontal Transform Kernel | Vertical Transform Kernel | 0 | 1 | 2 | 3 |
| 1 | DCT2 | DCT2 | 0 | - | - | - |
| 2 | DST7 | DST7 | 1 | 0 | - | - |
| 3 | DCT8 | DST7 | 1 | 1 | 0 | - |
| 4 | DST7 | DCT8 | 1 | 1 | 1 | 0 |
| 5 | DCT8 | DCT8 | 1 | 1 | 1 | 1 |

It should be noted that in Table 2, alternatively, DCT8 is replaced with DCT4, and DST7 is replaced with DST4, or DCT8 and DST7 are replaced with other transform kernels.

In addition, as shown in Table 3, for shortening a coding time, the transform pair (DCT8, DCT8) is deleted based on Table 2, that is, an RDO decision for (DCT8, DCT8) is not performed. In this way, the number of combinations is reduced from 67*5 to 67*4, and the number of RDO decisions is reduced. Thus, the coding time is shortened. In addition, since the transform pair (DCT8, DCT8) is not available, the number of bits of a binarized codeword corresponding to a transform pair index is also reduced from 4 to 3. Thus, the bit-rate overhead of coding is also reduced.

Table 3

| Transform Pair Index | Transform Pair | | Bits of Binarized Codeword | | |
|---|---|---|---|---|---|
| | Horizontal Transform Kernel | Vertical Transform Kernel | 0 | 1 | 2 |
| 1 | DCT2 | DCT2 | 0 | - | - |
| 2 | DST7 | DST7 | 1 | 0 | - |
| 3 | DCT8 | DST7 | 1 | 1 | 0 |
| 4 | DST7 | DCT8 | 1 | 1 | 1 |

It should be noted that in Table 3, alternatively, DCT8 is replaced with DCT2, or DCT8 is replaced with DCT2 when a preset shape constraint condition is satisfied.

In addition, as shown in Table 4, for shortening the coding time, the transform pair (DST7, DCT8) is deleted based on Table 3, that is, an RDO decision for (DST7, DCT8) is not performed. In this way, the number of combinations is reduced from 67*4 to 67*3, and the number of RDO decisions is reduced. Thus, the coding time is shortened. In addition, since the transform pairs (DCT8, DCT8) and (DST7, DCT8) are not available, the number of bits of the binarized codeword corresponding to the transform pair index is also reduced from 3 to 2. Thus, the bit-rate overhead of coding is also reduced.

Table 4

| Transform Pair Index | Transform Pair | | Bit of Binarized Codeword | | |
|---|---|---|---|---|---|
| | Horizontal Transform Kernel | Vertical Transform Kernel | 0 | 1 | 2 |
| 1 | DCT2 | DCT2 | 0 | - | - |
| 2 | DST7 | DST7 | 1 | 0 | - |
| 3 | DCT8 | DST7 | 1 | 1 | - |

In addition, as shown in Table 5, for shortening the coding time, the transform pair (DCT8, DST7) is deleted based on Table 3, that is, an RDO decision for (DCT8, DST7) is not made. In this way, the number of combinations is reduced from 67*4 to 67*3, and the number of RDO decisions is reduced. Thus, the coding time is shortened. In addition, since the transform pairs (DCT8, DCT8) and (DCT8, DST7) are not available, the number of bits of the binarized codeword corresponding to the transform pair index is also reduced from 3 to 2. Thus, the bit-rate of coding is also reduced.

Table 5

| Transform Pair Index | Transform Pair | | Bit of Binarized Codeword | | |
|---|---|---|---|---|---|
| | Horizontal Transform Kernel | Vertical Transform Kernel | 0 | 1 | 2 |
| 1 | DCT2 | DCT2 | 0 | - | - |
| 2 | DST7 | DST7 | 1 | 0 | - |
| 3 | DST7 | DCT8 | 1 | 1 | - |

In addition, as shown in Table 6, for shortening the coding time, the transform pairs (DCT8, DCT8), (DCT8, DST7), and (DST7, DCT8) are deleted based on Table 2, that is, RDO decisions for (DCT8, DCT8), (DCT8, DST7), and (DST7, DCT8) are not made. In this way, the number of combinations is reduced from 67*5 to 67*2, and the number of RDO decisions is reduced. Thus, the coding time is shortened. In addition, since transform pairs (DCT8, DCT8), (DCT8, DST7), and (DST7, DCT8) are not available, the number of bits of the binarized codeword corresponding to the transform pair index is also reduced from 3 to 1. Thus, the bit-rate of coding is also reduced.

It should be noted that in Tables 4 and 5, alternatively, DCT8 is replaced with DCT2, or DCT8 is replaced with DCT2 when a preset shape constraint condition is satisfied.

Table 6

| Transform Pair Index | Transform Pair | | Bits of Binarized Codeword | | |
|---|---|---|---|---|---|
| | Horizontal Transform Kernel | Vertical Transform Kernel | 0 | 1 | 2 |
| 1 | DCT2 | DCT2 | 0 | - | - |
| 2 | DST7 | DST7 | 1 | - | - |

It should be noted that when Table 4 is used, although the number of RDO decisions is reduced, the coding performance deteriorates.

In addition, it should also be noted that for Table 2, a first bit of the binarized codeword corresponding to the transform pair index is configured to identify whether the current block uses a transform pair corresponding to the transform pair index 1 or a transform pair corresponding to any of the transform pair indexes 2 to 5; a second bit is coded to identify whether the current block uses a transform pair corresponding to the transform pair index 2 or a transform pair corresponding to any of the transform pair indexes 3 to 5; a third bit is coded to identify whether the current block uses a transform pair corresponding to the transform pair index 3 or a transform pair corresponding to any of the transform pair indexes 4 and 5; and a fourth bit is coded to identify whether the current block uses a transform pair corresponding to the transform pair index 4 or a transform pair corresponding to the transform pair index 5. That is, if the first bit is 0, then the transform pair (DCT2, DCT2) is used; if the first bit is 1 and the second bit is 0, then the transform pair (DST7, DST7) is used; if the first bit is 1, the second bit is 1, and the third bit is 0, then the transform pair (DCT8, DST7) is used; if the first bit is 1, the second bit is 1, the third bit is 1, and the fourth bit is 0, then the transform pair (DST7, DCT8) is used; and if the first bit is 1, the second bit is 1, the third bit is 1, and the fourth bit is 1, then the transform pair (DCT8, DCT8) is used.

In addition, it should also be noted that for Table 3, the first bit of the binarized codeword corresponding to the transform pair index is configured to identify whether the current block uses a transform pair corresponding to the transform pair index 1 or a transform pair corresponding to any of the transform pair indexes 2 to 4; the second bit is coded to identify whether the current block uses a transform pair corresponding to the transform pair index 2 or a transform pair corresponding to any of the transform pair indexes 3 and 4; and the third bit is coded to identify whether the current block uses a transform pair corresponding to the transform pair index 3 or a transform pair corresponding to the transform pair index 4. That is, if the first bit is 0, then the transform pair (DCT2, DCT2) is used; if the first bit is 1 and the second bit is 0, then the transform pair (DST7, DST7) is used; if the first bit is 1, the second bit is 1, and the third bit is 0, then the transform pair (DCT8, DST7) is used; and if the first bit is 1, the second bit is 1, and the third bit is 1, then the transform pair (DST7, DCT8) is used.

In addition, it should also be noted that for Table 4, the first bit of the binarized codeword corresponding to the transform pair index is configured to identify whether the current block uses a transform pair corresponding to the transform pair index 1 or a transform pair corresponding to any of the transform pair indexes 2 and 3; the second bit is coded to identify whether the current block uses a transform pair corresponding to the transform pair index 2 or a transform pair corresponding to the transform pair index 3. That is, if the first bit is 0, then the transform pair (DCT2, DCT2) is used; if the first bit is 1 and the second bit is 0, then the transform pair (DST7, DST7) is used; and if the first bit is 1 and the second bit is 1, then the transform pair (DCT8, DST7) is used.

In addition, it should also be noted that for Table 5, the first bit of the binarized codeword corresponding to the transform pair index is configured to identify whether the current block uses a transform pair corresponding to the transform pair index 1 or a transform pair corresponding to any of the transform pair indexes 2 and 3; and the second bit is coded to identify whether the current block uses a transform pair corresponding to the transform pair index 2 or a transform pair corresponding to the transform pair index 3. That is, if the first bit is 0, then the transform pair (DCT2, DCT2) is used; if the first bit is 1 and the second bit is 0, then the transform pair (DST7, DST7) is used; and if the first bit is 1 and the second bit is 1, then the transform pair (DST7, DCT8) is used.

In addition, it should also be noted that for Table 6, the first bit of the binarized codeword corresponding to the transform pair index is configured to identify whether the current block uses a transform pair corresponding to the transform pair index 1 or a transform pair corresponding to the transform pair index 2. That is, if the first bit is 0, then the transform pair (DCT2, DCT2) is used; and if the first bit is 1, then the transform pair (DST7, DST7) is used.

In step 802, the coding device determines the transform pair corresponding to the current block and the transform pair index corresponding to the current block.

The transform pair includes a vertical transform kernel and a horizontal transform kernel.

In practice, the coding device acquires the finally-selected transform pair and then selects the transform pair index corresponding to this transform pair based on a corresponding relationship between the transform pair and the transform pair index, which is described in any of Tables 2-6.

It should also be noted that during coding, generally, which one of Tables 2-6 is used has been determined, and thus only one of Tables 2-6 is acquired.

In an exemplary embodiment of the present disclosure, before step 802, the following determination may also be performed.

The coding device determines that the height and width of the current block are less than or equal to a preset threshold and the current block is a luma block.

The preset threshold is predefined and stored to the coding device and is generally N (N can be 32).

In practice, after step 801 is performed, the coding device determines the number of pixels of the current block in a height direction, i.e., the height of the current block, and determine the number of pixels of the current block in a width direction, i.e., the width of the current block. In addition, the coding device determines whether the current block is the luma block. If the current block is the luma block and the height and width of the current block are less than or equal to the preset threshold, step 802 is performed.

In an exemplary embodiment of the present disclosure, the transform pair index is also determined based on the intra prediction mode or shape information of the current block, as shown below.

Fashion I: The coding device determines the transform pair corresponding to the current block, and determines, based on the intra prediction mode of the current block and the transform pair, the transform pair index corresponding to the current block.

In practice, the coding device determines the transform pair and the intra prediction mode of the current block in the fashion mentioned above, then acquires a preset syntax table of an explicit multi-kernel transform pair, and determines, based on the intra prediction mode and the transform pair in this syntax table, the transform pair index corresponding to the current block.

In an exemplary embodiment of the present disclosure, the transform pair index is determined based on the intra prediction mode in the following fashion and the corresponding processing is as follows.

It is determined that the transform pair index corresponding to the current block is a first index if the transform pair is a first transform pair and a mode number of the intra prediction mode of the current block is less than or equal to a preset value. It is determined that the transform pair index corresponding to the current block is the first index if the transform pair is a second transform pair and the mode number of the intra prediction mode of the current block is greater than the preset value. It is determined that the transform pair index corresponding to the current block is a second index if the transform pair is the second transform pair and the mode number of the intra prediction mode of the current block is less than or equal to the preset value. It is determined that the transform pair index corresponding to the current block is the second index if the transform pair is the first transform pair and the mode number of the intra prediction mode of the current block is greater than the preset value.

In practice, the preset syntax table of the explicit multi-kernel transform pair is as shown in Table 7.

Table 7

| Transform Pair Index | Transform Pair | | Bits of Binarized Codeword | | | |
|---|---|---|---|---|---|---|
| | Horizontal Transform Kernel | Vertical Transform Kernel | 0 | 1 | 2 | 3 |
| 1 | DCT2 | DCT2 | 0 | | | |
| 2 | DST7 | DST7 | 1 | 0 | | |
| 3 | Mode=0~34? DST7: DCT8 | Mode=0~34? DCT8: DST7 | 1 | 1 | 0 | |
| 4 | Mode=0~34? DCT8: DST7 | Mode=0~34? DST7: DCT8 | 1 | 1 | 1 | 0 |
| 5 | DCT8 | DCT8 | 1 | 1 | 1 | 1 |

In Table 7, if the first transform pair is (DST7, DCT8) and the mode number of the intra prediction mode is less than or equal to the preset value (the preset value is 34), it is determined that the transform pair index is 3 and thus the corresponding binarized codeword has three bits, which are 1, 1, and 0 in sequence. If the second transform pair is (DCT8, DST7) and the mode number of the intra prediction mode is greater than 34, it is determined that the corresponding transform pair index is 3 and thus the corresponding binarized codeword has three bits, which are 1, 1, and 0 in sequence. If the second transform pair is (DCT8, DST7) and the mode number of the intra prediction mode is less than or equal to 34, it is determined that the corresponding transform pair index is 4 and thus the corresponding binarized codeword has four bits, which are 1, 1, 1, and 0 in sequence. If the first transform pair is (DST7, DCT8) and the mode number of the intra prediction mode is greater than 34, it is determined that the transform pair index is 4 and thus the corresponding binarized codeword has four bits, which are 1, 1, 1, and 0 in sequence.

It should also be noted that as the transform pair index is directly determined based on some transform pairs, the condition which is satisfied when the fashion I is used is that the determined transform pair is not any one of (DCT2, DCT2), (DST7, DST7), and (DCT8, DCT8).

It should also be noted that in Table 7, where the transform pair index is 3, the Mode = 0~34? DST7: DCT8 means that if it is true that the mode number of the intra prediction mode is 0 to 34, the horizontal transform kernel is DST7, and otherwise, the horizontal transform kernel is DCT8, and the Mode = 0~34? DCT8: DST7 means that if it is true that the mode number of the intra prediction mode is 0 to 34, the vertical transform kernel is DCT8, and otherwise, the vertical transform kernel is DST7. Where the transform pair index is 4, the Mode = 0~34? DCT8: DST7 means that if it is true that the mode number of the intra prediction mode is 0 to 34, the horizontal transform kernel is DCT8, and otherwise, the horizontal transform kernel is DST7, and the Mode = 0~34? DST7: DCT8 means that if it is true that the mode number of the intra prediction mode is 0 to 34, the vertical transform kernel is DST7, and otherwise, the vertical transform kernel is DCT8.

Fashion II: The coding device determines the transform pair corresponding to the current block, and determines, based on the shape information of the current block and the transform pair, the transform pair index corresponding to the current block.

In practice, the coding device determines the transform pair and the shape information of the current block in the fashion mentioned above, then acquires the preset syntax table of the explicit multi-kernel transform pair, and determines, based on the transform pair and the shape information of the current block in this table, the transform pair index corresponding to the current block.

In an exemplary embodiment of the present disclosure, the processing of determining the transform pair index with reference to the shape information of the current block may be as follows.

It is determined that the transform pair index corresponding to the current block is a first index if the transform pair is a first transform pair and the shape information of the current block satisfies a preset shape constraint condition. It is determined that the transform pair index corresponding to the current block is the first index if the transform pair is a second transform pair and the shape information of the current block does not satisfy the preset shape constraint condition. It is determined that the transform pair index corresponding to the current block is a second index if the transform pair is the second transform pair and the shape information of the current block satisfies the preset shape constraint condition. It is determined that the transform pair index corresponding to the current block is the second index if the transform pair is the first transform pair and the shape information of the current block does not satisfy the preset shape constraint condition.

The preset shape constraint condition may be preset and stored to the coding device. The preset shape constraint condition is that the width is greater than or equal to the height.

In practice, the preset syntax table of the explicit multi-kernel transform pair is as shown in Table 8.

Table 8

| Transform Pair Index | Transform Pair | | Bits of Binarized Codeword | | | |
|---|---|---|---|---|---|---|
| | Horizontal Transform Kernel | Vertical Transform Kernel | 0 | 1 | 2 | 3 |
| 1 | DCT2 | DCT2 | 0 | | | |
| 2 | DST7 | DST7 | 1 | 0 | | |
| 3 | W≥H? DST7: DCT8 | W≥H? DCT8: DST7 | 1 | 1 | 0 | |
| 4 | W≥H? DCT8: DST7 | W≥H? DST7: DCT8 | 1 | 1 | 1 | 0 |
| 5 | DCT8 | DCT8 | 1 | 1 | 1 | 1 |

In Table 8, if the first transform pair is (DST7, DCT8) and the shape information of the current block is that the width is greater than or equal to the height, it is determined that the transform pair index is 3 and thus the corresponding binarized codeword has three bits, which are 1, 1, and 0 in sequence. If the second transform pair is (DCT8, DST7) and the shape information of the current block is that the width is less than the height, it is determined that the corresponding transform pair index is 3 and thus the corresponding binarized codeword has three bits, which are 1, 1, and 0 in sequence. If the second transform pair is (DCT8, DST7) and the shape information of the current block is that the width is greater than or equal to the height, it is determined that the corresponding transform pair index is 4 and thus the corresponding binarized codeword has four bits, which are 1, 1, 1, and 0 in sequence. If the first transform pair is (DST7, DCT8) and the shape information of the current block is that the width is less than the height, it is determined that the transform pair index is 4 and thus the corresponding binarized codeword has four bits, which are 1, 1, 1, and 0 in sequence.

Based on Table 8, in the fashion II, where the shape information of the current block indicates that the width is greater than or equal to the height and the first transform pair is (DST7, DCT8), the first index is 3; where the shape information of the current block indicates that the width is less than the height and the second transform pair is (DCT8, DST7), the first index is 3; where the shape information of the current block indicates that the width is less than the height and the first transform pair is (DST7, DCT8), the second index is 4; and where the shape information of the current block indicates the width is greater than or equal to the height and the second transform pair is (DCT8, DST7), the second index is 4.

It should be noted that as the transform pair index may be directly determined based on some transform pairs, the condition which is satisfied when the fashion II is used is that the determined transform pair is not any one of (DCT2, DCT2), (DST7, DST7), and (DCT8, DCT8).

It should also be noted that in Table 8, where the transform pair index is 3, the $W \geq H$? DST7: DCT8 means that if it is true that the width of the current block is greater than or equal to its height, the horizontal transform kernel is DST7, and otherwise, the horizontal transform kernel is DCT8; and the $W \geq H$? DCT8: DST7 means that if it is true that the width of the current block is greater than or equal to its height, the vertical transform kernel is DCT8, and otherwise, the vertical transform kernel is DST7. Where the transform pair index is 4, the $W \geq H$? DCT8: DST7 means that if it is true that the width of the current block is greater than or equal to its height, the horizontal transform kernel is DCT8, and otherwise, the horizontal transform kernel is DST7; and the $W \geq H$? DST7: DCT8 means that if it is true that the width of the current block is greater than or equal to the height, the vertical transform kernel is DST7, and otherwise, the vertical transform kernel is DCT8.

It should also be noted that in Table 7, Mode represents the mode number. In Table 8, W represents the width and H represents the height.

In this way, due to adaptive adjustment of the priority of the transform pair based on the shape information and the intra prediction mode of the current block, the higher the probability of the transform pair is, the shorter the binarized codeword corresponding to the transform pair index that needs to be coded is.

In addition, in response to acquiring the current block, the coding device determines whether the height and width of the current block both are less than or equal to N (N may be 32), and determines whether the current block is the luma block. If the height and width of the current block both are less than or equal to N and the current block is the luma block, the coding device continues to perform step 802. If at least one of the conditions that the height and width of the current block both are less than or equal to N and the current block is the luma block is not satisfied, the coding device directly acquires a preset transform pair, i.e., (DCT2, DCT2).

In step 803, the coding device acquires coded data corresponding to the current block by coding the residual signal of the current block based on the transform pair.

In practice, in response to acquiring the transform pair corresponding to the current block, the coding device transforms the residual signal of the current block based on the transform pair to acquire a transform coefficient, then quantize the transform coefficient to acquire a quantization coefficient and perform entropy coding on the quantization coefficient to acquire the coded data corresponding to the current block.

In step 804, the coding device codes the transform pair index by subjecting a first bit of a binarized codeword corresponding to the transform pair index to context-based adaptive binary arithmetic coding based on one context model, and adds the coded transform pair index to the coded data of the current block.

In practice, the transform pair index is added to the coded data, such that a decoding device acknowledges the transform pair used by the coding device.

The coding device performs the context-based adaptive binary arithmetic coding based on the one context model on the first bit of the binarized codeword corresponding to the transform pair index. If the binarized codeword further includes other bits and these bits may be coded by context-based adaptive binary arithmetic coding (CABAC) or coded by bypass binary arithmetic coding. Then the coding device adds the coded transform pair index to the coded data of the current block.

Thus, the coding of the current block is completed. Each current block is processed according to the flowchart shown in FIG. 8, such that an entire segment of video data is coded.

In an exemplary embodiment of the present disclosure, the other bits is coded by the bypass binary arithmetic coding and the corresponding processing is as follows.

If the binarized codeword corresponding to the transform pair index includes a plurality of bits, the first bit is code by the context-based adaptive binary arithmetic coding based on the one context model and at least one of bits, except the first bit, among the plurality of bits is coded by the bypass binary arithmetic coding, and then the coded transform pair index is added to the coded data of the current block.

In practice, when the binarized codeword corresponding to the transform pair index includes the plurality of bits, the adaptive binary arithmetic coding is performed on the first bit based on the one context model and at least one of bits, except the first bit, among the plurality of bits is coded by the bypass binary arithmetic coding, and then the coded transform pair index is added to the coded data of the current block.

For example, if the used transform pair is (DCT8, DCT8) and there are four bits correspondingly, which are 1, 1, 1, and 1 in sequence, the first bit is coded based on the one context model and the next three bits are coded by the bypass binary arithmetic coding. In this way, there is no need to store context models of the next few bits, such that the memory space can be saved and the coding and decoding complexity is lowered.

In addition, a target flag is added to the coded data such that the decoding device uses an explicit multi-kernel transform mode, wherein the target flag indicates that the explicit multi-kernel transform mode is enabled.

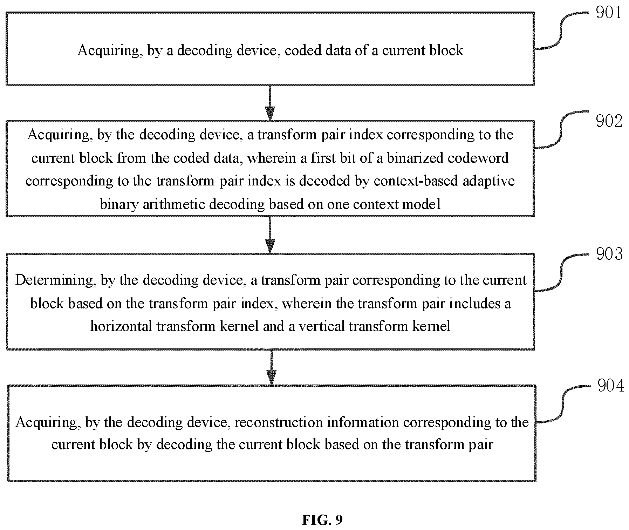

For the coding mode shown in FIG. 8, an embodiment of the present disclosure further provides a corresponding decoding mode. As shown in FIG. 9, the processing flow is as follows.

In step 901, a decoding device acquires coded data of a current block.

In practice, when there is coded data to be decoded, the decoding device acquires the coded data, then acquires the coded data of the current block by performing entropy decoding on the coded data and performing inverse quantization on an entropy decoding result.

In step 902, the decoding device acquires a transform pair index of the current block from the coded data, wherein a first bit of a binarized codeword corresponding to the transform pair index is decoded by context-based adaptive binary arithmetic coding based on one context model.

In practice, the decoding device acquires the transform pair index corresponding to the current block from the coded data of the current block. When the coding device codes the transform pair index of the current block, adaptive binary arithmetic coding based on the one context model is performed on the first bit of the binarized codeword corresponding to the transform pair index. Thus, when decoding the first bit, the decoding device also performs adaptive binary arithmetic coding based on the one context model on the first bit.

In an exemplary embodiment of the present disclosure, before step 902, the following determination may also be performed.

The decoding device determines that the height and width of the current block both are less than or equal to a preset threshold and the current block is a luma block.

The preset threshold is predefined and stored to the decoding device and is generally N (N can be 32).

In practice, after step 901 is performed, the decoding device determines the number of pixels of the current block in a height direction, i.e., the height of the current block, and the number of pixels of the current block in a width direction, i.e., the width of the current block. In addition, the decoding device determines whether the current block is the luma block. If the current block is the luma block and the height and width of the current block both are less than or equal to the preset threshold, step 902 is performed.

In addition, before step 902 is performed, whether a target flag is carried in the coded data is also determined, and the target flag indicates that explicit multi-kernel transform processing is performed. If the coded data includes the target flag, then the explicit multi-kernel transform processing is enabled, and then step 902 can be performed.

In step 903, the decoding device determines, based on the transform pair index, a transform pair corresponding to the current block, wherein the transform pair includes a horizontal transform kernel and a vertical transform kernel.

In practice, in response to determining the transform pair index of the current block, the decoding device determines, based on a corresponding relationship between the transform pair index and the transform pair, the transform pair corresponding to the current block.

In step 904, the decoding device acquires reconstruction information corresponding to the current block by decoding the current block based on the transform pair.

In practice, in response to determining the transform pair corresponding to the current block, the decoding device acquires a residual signal corresponding to the current block by performing reverse transform processing on inversely quantized data of the current block with the transform pair, and then acquires the reconstruction information corresponding to the current block by adding the residual signal and a prediction signal of the current block.

Thus, the decoding of the current block is completed. Each current block is processed according to the flowchart shown in FIG. 9, such that an entire segment of video data is decoded.

In step 903, the transform pair of the current block may be determined in a variety of fashions and the variety of feasible fashions is given as follows.

Fashion I: As shown in Table 2, where the transform kernel index is 1, the used transform pair is (DCT2, DCT2); where the transform kernel index is 2, the used transform pair is (DST7, DST7); where the transform kernel index is 3, the used transform pair is (DCT8, DST7); where the transform kernel index is 4, the used transform pair is (DST7, DCT8); and where the transform kernel index is 5, the used transform pair is (DCT8, DCT8).

Fashion II: The transform pair of the current block is determined based on the corresponding relationship between the transform pair index and the transform pair list in Table 3 and the transform pair index of the current block.

Fashion III: The transform pair of the current block is determined based on the corresponding relationship between the transform pair index and the transform pair list in Table 4 and the transform pair index of the current block.

Fashion IIII: The transform pair of the current block is determined based on the corresponding relationship between the transform pair index and the transform pair list in Table 5 and the transform pair index of the current block.

Fashion V: The transform pair of the current block is determined based on the corresponding relationship between the transform pair index and the transform pair list in Table 6 and the transform pair index of the current block.

In an exemplary embodiment of the present disclosure, the transform pair is also determined based on intra-frame mode information of the current block or shape information of the current block, and the corresponding processing may be as follows.

The decoding device determines, based on an intra prediction mode and the transform pair index of the current block, the transform pair corresponding to the current block; or the decoding device determines, based on the transform pair index, and the width and height of the current block, the transform pair corresponding to the current block.

In practice, it is determined that the transform pair corresponding to the current block is a first transform pair if the transform pair index is a first index and a mode number of the intra prediction mode of the current block is less than or equal to a preset value; it is determined that the transform pair corresponding to the current block is a second transform pair if the transform pair index is the first index and the mode number of the intra prediction mode of the current block is greater than the preset value; it is determined that the transform pair corresponding to the current block is the second transform pair if the transform pair index is a second index and the mode number of the intra prediction mode of the current block is less than or equal to the preset value; and it is determined that the transform pair corresponding to the current block is the first transform pair if the transform pair index is the second index and the mode number of the intra prediction mode of the current block is greater than the preset value.

Alternatively, it is determined that the transform pair corresponding to the current block is a first transform pair if the transform pair index is a first index and the shape information of the current block satisfies a preset shape constraint condition; it is determined that the transform pair corresponding to the current block is a second transform pair if the transform pair index is the first index and the shape information of the current block does not satisfy the preset shape constraint condition; it is determined that the transform pair corresponding to the current block is the second transform pair if the transform pair index is a second index and the shape information of the current block satisfies the preset shape constraint condition; and it is determined that the transform pair corresponding to the current block is the first transform pair if the transform pair index is the second index and the shape information of the current block does not satisfy the preset shape constraint condition (this process corresponds to the process of step 803 and is not repeatedly descried here).

The preset value is 34 in Table 7, the first index is 3, the first transform pair is (DST7, DCT8), the second index is 4, and the second transform pair is (DCT8, DST7).

In an exemplary embodiment of the present disclosure, for saving the memory space of the coding device, when the coding device codes the binarized codeword corresponding to the transform pair index, if the binarized codeword corresponding to the transform pair index includes a plurality of bits, at least one of bits, except the first bit, among the plurality of bits is coded by a bypass binary arithmetic coding. In this way, if a bit is coded by the bypass binary arithmetic coding mode, there is no need to store the context mode. Thus, the memory space can be saved. Likewise, when performing decoding, the decoding device performs decoding in the corresponding fashion.

In the embodiment of the present disclosure, when coding the current block, the coding device acquires the transform pair corresponding to the current block for coding, rather than directly acquiring a preset transform pair, such that the coding and decoding performance can be improved. When coding the binarized codeword corresponding to the transform pair index, the coding device codes the first bit of the binarized codeword corresponding to the transform pair index by the one context model rather than a plurality of context models, such that the memory space can be saved. In addition, because the plurality of context models are not needed, the context does not need to be updated, which lowers the coding and decoding complexity.

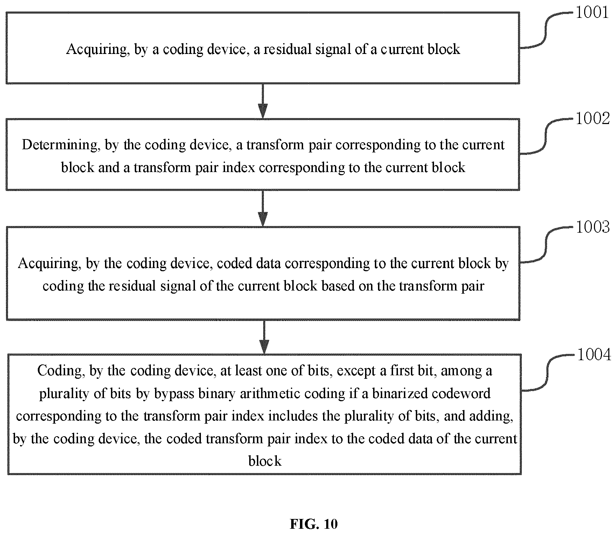

Considering saving the memory space when a binarized codeword corresponding to a transform pair index includes a plurality of bits, another embodiment of the present disclosure provides the following coding and decoding process, as shown in FIG. 10.

In step 1001, a coding device acquires a residual signal of a current block.

In practice, when coding video data, the coding device firstly acquires the residual signal by performing intra prediction (a fashion in which the residual signal is acquired is identical with that in the existing video coding standard and is not repeatedly described here), and then takes the residual signal as a residual signal of the current block to be processed currently.

The fashion in which an intra prediction mode is selected is the same as the fashion in which the intra prediction mode is selected in step 801. For details about this fashion, reference may be made to step 801, which is not repeatedly described here.

In step 1002, the coding device determines a transform pair corresponding to the current block and a transform pair index corresponding to the current block.

The transform pair includes a vertical transform kernel and a horizontal transform kernel.

In practice, the coding device acquires the finally-selected transform pair and then selects the transform pair index corresponding to this transform pair based on any of Tables 2-6 (for details about this process, reference may be made to step 802).

It should be noted that during coding, generally, which one of Tables 2-6 is used has been determined, and thus only one of Tables 2-6 is acquired.

In an exemplary embodiment of the present disclosure, the transform pair index may be determined in a variety of fashions, and two feasible implementation fashions are given as follows.

Fashion I: The coding device determines the transform pair corresponding to the current block, and determines, based on the intra prediction mode of the current block and the transform pair, the transform pair index corresponding to the current block.

This process is identical with fashion I shown in Table 7 in step 802 and is not repeatedly described here.

Fashion II: The coding device determines the transform pair corresponding to the current block, and determines, based on shape information of the current block and the transform pair, the transform pair index corresponding to the current block.

This process is identical with fashion II shown in Table 8 in step 802 and is not repeatedly described here.

In addition, in response to acquiring the current block, the coding device firstly determines whether the height and width of the current block both are less than or equal to N (N may be 32) and determine whether the current block is a luma block. If the height and width of the current block both are less than or equal to 32 and the current block is the luma block, the coding device continues to execute step 1002. If at least one of the conditions that the height and width of the current block both are less than or equal to 32 and the current block is the luma block is not satisfied, the coding device directly acquires a preset transform pair (DCT2, DCT2).

In step 1003, the coding device acquires coded data corresponding to the current block by coding the residual signal of the current block based on the transform pair.

In practice, in response to acquiring the transform pair corresponding to the current block, the coding device acquires a transform coefficient by transforming the residual signal of the current block based on the transform pair, then acquiring a quantization coefficient by quantizing the transform coefficient, and acquires the coded data corresponding to the current block by performing entropy coding on the quantization coefficient to acquire the coded data corresponding to the current block.

In step 1004, if the binarized codeword corresponding to the transform pair index includes a plurality of bits, the coding device codes at least one of bits, except a first bit, among the plurality of bits by bypass binary arithmetic coding, and adds the coded transform pair index to the coded data of the current block.

In practice, the transform pair index is added to the coded data, such that a decoding device acknowledges the transform pair used by the coding device.

If the binarized codeword corresponding to the transform pair index includes the plurality of bits, the coding device codes the first bit of the binarized codeword corresponding to the transform pair index by CABAC. If the binarized codeword further includes other bits, at least one of the other bits is coded by the bypass binary arithmetic coding, and then the coded transform pair index is added to the coded data. In this way, since a context model does not need to be stored for the bypass binary arithmetic coding mode, when this bit is coded by the bypass binary arithmetic coding, the context model does not need to be stored for this bit.

Thus, the coding of the current block is completed. Each current block is processed according to the flowchart shown in FIG. 10, such that an entire segment of video data may be coded.

In an exemplary embodiment of the present disclosure, the first bit is coded by context-based adaptive binary arithmetic coding based on one context model.

In practice, when the first bit is coded by the CABAC, adaptive binary arithmetic coding is performed based on one context model rather than a plurality of context models, such that there is no need to store the plurality of context models. Thus, the memory space can also be saved.

In addition, a target flag is added to the coded data such that the decoding device uses an explicit multi-kernel transform mode, wherein the target flag indicates that the explicit multi-kernel transform mode is enabled

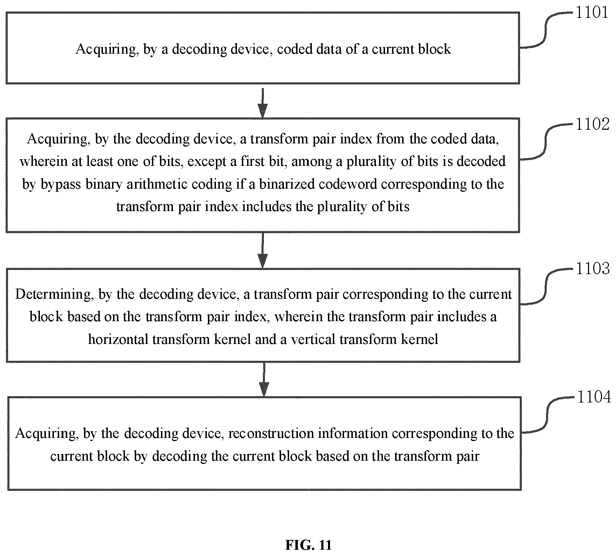

Based on the coding mode shown in FIG. 10, as shown in FIG. 11, an embodiment of the present disclosure further provides a corresponding decoding mode.

In step 1101, a decoding device acquires coded data of a current block.

In practice, where coded data needs to be decoded, the decoding device acquires the coded data, then acquires an entropy decoding result by performing entropy decoding on the coded data, and acquires the coded data of the current block by performing inverse quantization on the entropy decoding result.

In step 1102, the decoding device acquires a transform pair index from the coded data, wherein at least one of bits, except a first bit, among a plurality of bits is decoded by bypass binary arithmetic coding if a binarized codeword corresponding to the transform pair index includes the plurality of bits.

In practice, the decoding device acquires the transform pair index corresponding to the current block from the coded data. When coding the transform pair index of the current block, the coding device codes at least one of bits, except the first bit, among the plurality of bits by the bypass binary arithmetic coding if the binarized codeword corresponding to the transform pair index includes the plurality of bits. In this way, when decoding bits coded by the bypass binary arithmetic coding, the decoding device also decodes the bits by bypass binary arithmetic coding. Thus, the memory space of the decoding device can also be saved.

In an exemplary embodiment of the present disclosure, for saving the memory space, the first bit of the plurality of bits is coded by one context model.

In an exemplary embodiment of the present disclosure, before step 1102 is performed, it is determined that the height and width of the current block both are less than or equal to a target value and the current block is a luma block.

In practice, the target value is preset and stored to the decoding device and is generally N (N may be 32). When the height and width of the current block both are less than or equal to N and the current block is the luma block, step 1102 is performed only. Otherwise, it is determined that the transform pair corresponding to the current block is (DCT2, DCT2), and subsequently this transform pair is used directly for decoding.

In addition, before step 1102 is performed, whether a target flag is carried in the coded data may also be determined, and the target flag indicates that explicit multi-kernel transform processing is performed. If the target flag is carried in the coded data, then the explicit multi-kernel transform processing is enabled, and then step 1102 is performed.

In step 1103, the decoding device determines a transform pair corresponding to the current block based on the transform pair index, wherein the transform pair includes a horizontal transform kernel and a vertical transform kernel.

This process is identical with the processing process in step 903. For details about this process, reference may be made to step 903, which is not repeatedly described here.

In an exemplary embodiment of the present disclosure, the transform pair is also determined based on the height and width of the current block or an intra prediction mode of the current block, and the corresponding processing may be as follows.

The transform pair corresponding to the current block is determined based on the intra prediction mode of the current block and the transform pair index; or the transform pair corresponding to the current block is determined based on shape information of the current block and the transform pair index. The transform pair includes the horizontal transform kernel and the vertical transform kernel.

In practice, this process is the same as the fashion in which the transform pair is determined based on the height and width of the current block or the intra prediction mode of the current block in step 903. For details about this process, reference may be made to step 903, which is not repeatedly described here.

In step 1104, the decoding device acquires reconstruction information corresponding to the current block by decoding the current block based on the transform pair.

In practice, in response to determining the transform pair corresponding to the current block, the decoding device acquires a residual signal corresponding to the current block by performing reverse transform processing on a quantization coefficient corresponding to the current block with the transform pair. Afterwards, the decoding device constructs a prediction signal in the used intra prediction mode with pixel values of pixels in a region which has been reconstructed around the current block, and then acquires the reconstruction information corresponding to the current block by adding the residual signal and the prediction signal.

Thus, the decoding of the current block is completed. Each current block is processed according to the flowchart shown in FIG. 11, such that an entire segment of video data is decoded.

In the embodiment of the present disclosure, when coding the current block, the coding device acquires the transform pair corresponding to the current block for coding, rather than directly acquiring a preset transform pair, such that the coding and decoding performance can be improved. When coding the transform pair index, the coding device codes the at least one of bits, except the first bit, in the binarized codeword corresponding to the transform pair index by the bypass binary arithmetic coding, and for the at least one bit, there is no need to store the context model. Thus, the memory space can be saved. In addition, for the at least one bit, the bypass binary arithmetic coding rather than CABAC is adopted, such that there is no need to update the context model. Thus, the coding and parsing complexity can also be lowered.

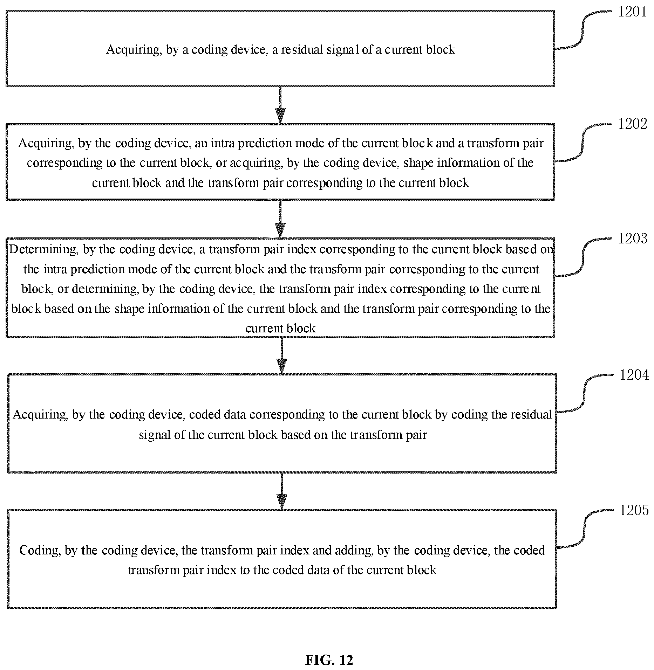

In another embodiment of the present disclosure, as shown in FIG. 12, the processing of determining a transform pair based on shape information of a current block or an intra prediction mode of the current block is also provided.

In step 1201, a coding device acquires a residual signal of a current block.

In practice, when coding video data, the coding device firstly acquires the residual signal by performing intra prediction (a fashion in which the residual signal is acquired is identical with that in the existing video coding standard and is not repeatedly described here), and then takes the residual signal as a residual signal of the current block to be processed currently.

It should be noted that the TU in the embodiment of the present disclosure is the same as the CU mentioned above.

The fashion in which the intra prediction mode is selected is the same as the fashion in which the intra prediction mode is selected in step 801. For details about this fashion, reference may be made to step 801, which is not repeatedly described here.

In step 1202, the coding device acquires the intra prediction mode of the current block and a transform pair corresponding to the current block, or acquires the shape information of the current block and the transform pair corresponding to the current block.

The transform pair includes a vertical transform kernel and a horizontal transform kernel.

In practice, the coding device acquires the intra prediction mode (that is, the intra prediction mode corresponding to the current block) finally used in the intra prediction in step 1201, and the transform pair (that is, the transform pair corresponding to the current block) corresponding to the intra prediction mode when the rate-distortion cost is lowest.

Alternatively, the coding device determines the height and width of the current block (that is, the number of pixels of the current block in the height direction, and the number of pixels of the current block in the width direction). In this way, the coding device acquires the shape information of the current block, and acquires the transform pair used when the rate-distortion cost is lowest (that is, the transform pair corresponding to the current block).

In addition, in response to acquiring the current block, the coding device determines whether the height and width of the current block both are less than or equal to N (N may be 32), and determines whether the current block is a luma block. If the height and width of the current block both are less than or equal to N and the current block is the luma block, the coding device continues to perform step 1202. At least one of the conditions that the height and width of the current block both are less than or equal to N and the current block is the luma block is not satisfied, the coding device directly acquires a preset transform pair, i.e., (DCT2, DCT2).

In step 1203, the coding device determines, based on the intra prediction mode of the current block and the transform pair corresponding to the current block, a transform pair index corresponding to the current block; alternatively, the coding device determines, based on the shape information of the current block and the transform pair corresponding to the current block, the transform pair index corresponding to the current block.

In practice, where the transform pair determined in step 1202 is not any one of (DCT2, DCT2), (DST7, DST7), and (DCT8, DCT8), a preset syntax table of an explicit multi-kernel transform pair (as shown in Table 7) is acquired, and the intra prediction mode of the current block and the transform pair index corresponding to the transform pair, i.e., the transform pair index corresponding to the current block, are determined from Table 7. For example, where the transform pair is (DST7, DCT8) and a mode number of the intra prediction mode of the current block is 32, the corresponding transform pair index is 3.

Alternatively, where the transform pair determined in step 1202 is not any one of (DCT2, DCT2), (DST7, DST7), and (DCT8, DCT8), the preset syntax table of the explicit multi-kernel transform pair (as shown in Table 8) is acquired, and the shape information of the current block and the transform pair index corresponding to the transform pair, i.e., the transform pair index corresponding to the current block, are determined from Table 8. For example, if the transform pair is (DST7, DCT8) and the width of the current block is greater than its height, the corresponding transform pair index is 3.

In an exemplary embodiment of the present disclosure, the coding device determines the transform kernel index based on the intra prediction mode and the transform pair by the flowing fashion.

It is determined that the transform pair index corresponding to the current block is a first index if the transform pair is a first transform pair and a mode number of the intra prediction mode of the current block is less than or equal to a preset value. It is determined that the transform pair index corresponding to the current block is the first index if the transform pair is a second transform pair and the mode number of the intra prediction mode of the current block is greater than the preset value. It is determined that the transform pair index corresponding to the current block is a second index if the transform pair is the second transform pair and the mode number of the intra prediction mode of the current block is less than or equal to the preset value. It is determined that the transform pair index corresponding to the current block is the second index if the transform pair is the first transform pair and the mode number of the intra prediction mode of the current block is greater than the preset value.

In practice, this process is identical with the fashion I shown in Table 7 in step 802 and is not repeatedly described here.

In an exemplary embodiment of the present disclosure, the coding device determines the transform kernel index based on the shape information of the current block and the transform pair by the following fashion.

It is determined that the transform pair index corresponding to the current block is a first index if the transform pair is a first transform pair and the shape information of the current block satisfies a preset shape constraint condition. It is determined that the transform pair index corresponding to the current block is the first index if the transform pair is a second transform pair and the shape information of the current block does not satisfy the preset shape constraint condition. It is determined that the transform pair index corresponding to the current block is a second index if the transform pair is the second transform pair and the shape information of the current block satisfies the preset shape constraint condition. It is determined that the transform pair index corresponding to the current block is the second index if the transform pair is the first transform pair and the shape information of the current block does not satisfy the preset shape constraint condition.

In practice, this process is identical with the fashion II shown in Table 8 in step 802 and is not repeatedly described here.

In step 1204, the coding device acquires coded data corresponding to the current block by coding the residual signal of the current block based on the transform pair.

In practice, in response to acquiring the transform pair corresponding to the current block, the coding device acquires a transform coefficient by transforming the residual signal of the current block based on the transform pair, then acquires a quantization coefficient by quantizing the transform coefficient, and acquire the coded data corresponding to the current block by performing entropy coding on the quantization coefficient.

In step 1205, the coding device codes the transform pair index and adds the coded transform pair index to the coded data of the current block.

In practice, a binarized codeword of the transform pair index is added to the coded data, such that a decoding device acknowledges the transform pair used by the coding device.

The coding device codes the transform pair index and then adds the coded transform pair index to the coded data.

Thus, the coding of the current block is completed. Each current block is processed according to the flow shown in FIG. 12, such that an entire segment of video data is coded.

In an exemplary embodiment of the present disclosure, for saving the memory space, the transform pair index is coded in a following fashion and the corresponding processing of step 1205 is as follows.

If the binarized codeword corresponding to the transform pair index includes a plurality of bits, a first bit is coded by CABAC and at least one of bits, except the first bit, among the plurality of bits is coded by bypass binary arithmetic coding.

In practice, if the binarized codeword corresponding to the transform pair index only includes one bit, this bit is coded by the CABAC directly. If the binarized codeword corresponding to the transform pair index includes the plurality of bits, the first bit is coded by the CABAC and at least one of bits, except the first bit, is coded by the bypass binary arithmetic coding. Then the coding device adds the coded transform pair index to the coded data of the current block. In this way, since some bits are coded by the bypass binary arithmetic coding when the binarized codeword corresponding to the transform pair index includes the plurality of bits and there is no need to store a context mode, the memory space can be saved.

In an exemplary embodiment of the present disclosure, the coding device performs context-based adaptive binary arithmetic coding based on one context model on the first bit in the binarized codeword corresponding to the transform pair index.

In practice, the coding device codes, based on the one context model, the first bit in the binarized codeword corresponding to the transform pair index. In this way, as only one context model is enabled, only one context model is stored and the occupied memory space is relatively small, thereby saving the memory space of the coding device.

In addition, a target flag is added to the coded data such that the decoding device uses an explicit multi-kernel transform mode, wherein the target flag indicates that the explicit multi-kernel transform mode is enabled.

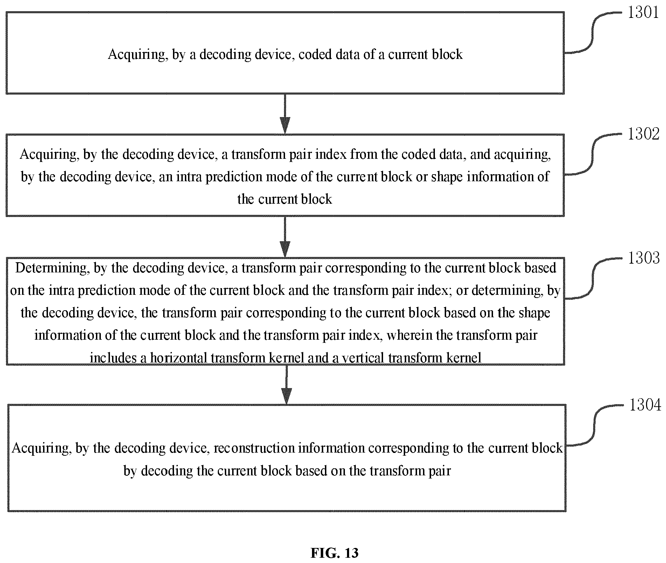

Based on the coding process shown in FIG. 12, an embodiment of the present disclosure further provides a decoding process, as shown in FIG. 13.

In step 1301, a decoding device acquires coded data of a current block.

In practice, when there is coded data to be decoded, the decoding device acquires the coded data, then perform entropy decoding on the coded data, and perform inverse quantization on an entropy decoding result to acquire the coded data of the current block.

In step 1302, the decoding device acquires a transform pair index from the coded data, and acquires an intra prediction mode of the current block or shape information of the current block.

In practice, the decoding device acquires the transform pair index corresponding to the current block from the coded data, determine the number of pixels included in the current block in a height direction (i.e., height) and determine the number of pixels included in the current block in a width direction (i.e., width). Then the decoding device determines sizes of the height and width of the current block, that is, acquires the shape information of the current block.

Alternatively, the decoding device acquires the transform pair index corresponding to the current block from the coded data, and acquires a mode number of the intra prediction mode by parsing an identification bit of the intra prediction mode in the coded data.

In an exemplary embodiment of the present disclosure, a binarized codeword corresponding to the transform pair index includes a plurality of bits, wherein a first bit is decoded by CABAC and at least one of bits, except the first bit, among the plurality of bits is decoded by a bypass binary arithmetic coding. In this way, since at a coding device, some bits are decoded by the bypass binary arithmetic coding mode when the transform pair index include the plurality of bits, and there is no need to store a context mode. Thus, the memory space is saved. In this way, the decoding device needs to decode the bits coded by the bypass binary arithmetic coding by a bypass binary arithmetic coding and also does not need to store the context model. Thus, the memory space can also be saved.

In an exemplary embodiment of the present disclosure, the first bit of the transform pair index is decoded based on one context model. In this way, as the decoding device only adopts the one context model, only one context model is stored and the occupied memory space is relatively small.

In an exemplary embodiment of the present disclosure, before step 1302 is performed, it is determined that the height and width of the current block both are less than or equal to a target value and the current block is a luma block.

In practice, the target value is preset and stored to the decoding device and is generally N (N is 32). When the height and width of the current block both are less than or equal to N and the current block is the luma block, step 1302 is performed only. Otherwise, it is determined that the transform pair corresponding to the current block is (DCT2, DCT2), and subsequently this transform pair is used directly for decoding.

In addition, before step 1302 is performed, whether a target flag is carried in the coded data may also be determined, and the target flag indicates that explicit multi-kernel transform processing is performed. If the target flag is carried in the coded data, then the explicit multi-kernel transform processing is enabled, and the step 1302 is performed.

In step 1303, the decoding device determines, based on the intra prediction mode of the current block and the transform pair index, a transform pair corresponding to the current block; alternatively, the decoding device determines, based on the shape information of the current block and the transform pair index, the transform pair corresponding to the current block, wherein the transform pair includes a horizontal transform kernel and a vertical transform kernel.

In practice, the transform pair includes the horizontal transform kernel and the vertical transform kernel. When the transform pair determined in step 1302 is not any one of (DCT2, DCT2), (DST7, DST7), and (DCT8, DCT8), a preset syntax table of an explicit multi-kernel transform pair (as shown in Table 7) is acquired, and the intra prediction mode of the current block and the transform pair corresponding to the transform pair index, i.e., the transform pair corresponding to the current block, are determined from Table 7. For example, where a mode number of the intra prediction mode corresponding to the current block is 32 and the transform pair index is 3, the transform pair is (DST7, DCT8).

Alternatively, where the transform pair determined in step 1302 is not any one of (DCT2, DCT2), (DST7, DST7), and (DCT8, DCT8), the preset syntax table of the explicit multi-kernel transform pair (as shown in Table 8) is acquired, and the height and width of the current block and the transform pair corresponding to the transform pair index, i.e., the transform pair corresponding to the current block, is determined from Table 8. For example, where the width of the current block is greater than its height and the transform pair index is 3, the transform pair is (DST7, DCT8).

In an exemplary embodiment of the present disclosure, the transform pair is determined based on the intra prediction mode and the transform pair index by the following fashion.

It is determined that the transform pair corresponding to the current block is a first transform pair if the transform pair index is a first index and the mode number of the intra prediction mode of the current block is less than or equal to a preset value. It is determined that the transform pair corresponding to the current block is a second transform pair if the transform pair index is the first index and the mode number of the intra prediction mode of the current block is greater than the preset value. It is determined that the transform pair corresponding to the current block is the second transform pair if the transform pair index is a second index and the mode number of the intra prediction mode of the current block is less than or equal to the preset value. It is determined that the transform pair corresponding to the current block is the first transform pair if the transform pair index is the second index and the mode number of the intra prediction mode of the current block is greater than the preset value.

In practice, where the transform pair determined in step 1302 is not any one of (DCT2, DCT2), (DST7, DST7), and (DCT8, DCT8), the preset syntax table of the explicit multi-kernel transform pair (as shown in Table 7) is acquired, and the transform pair corresponding to the current block is determined from Table 7.

The first index is 3, the preset value is 34, the first transform pair is (DST7, DCT8), the second index is 4, the preset value is 34, and the second transform pair is (DCT8, DST7).

In an exemplary embodiment of the present disclosure, the transform pair is determined based on the height and width of the current block and the transform pair index by the following fashion.

It is determined that the transform pair corresponding to the current block is a first transform pair if the transform pair index is a first index and shape information of the current block satisfies a preset shape constraint condition. It is determined that the transform pair corresponding to the current block is a second transform pair if the transform pair index is the first index and the shape information of the current block does not satisfy the preset shape constraint condition. It is determined that the transform pair corresponding to the current block is the second transform pair if the transform pair index is a second index and the shape information of the current block satisfies the preset shape constraint condition. It is determined that the transform pair corresponding to the current block is the first transform pair if the transform pair index is the second index and the shape information of the current block does not satisfy the preset shape constraint condition.

In practice, where the transform pair determined in step 1302 is not any one of (DCT2, DCT2), (DST7, DST7), and (DCT8, DCT8), the preset syntax table of the explicit multi-kernel transform pair (as shown in Table 8) is acquired, and the transform pair corresponding to the current block is determined from Table 8.

The first index is 3, W≥H, the first transform pair is (DST7, DCT8), the second index is 4, W≥H, and the second transform pair is (DCT8, DST7).

In step 1304, the decoding device acquires reconstruction information corresponding to the current block by decoding the current block based on the transform pair.

In practice, in response to determining a target transform pair corresponding to the current block, the decoding device acquires a residual signal corresponding to the current block by performing reverse transform processing on a quantization coefficient corresponding to the current block with the target transform pair. Afterwards, the decoding device constructs a prediction signal in the used intra prediction mode with pixel values of pixels in a region which has been reconstructed around the current block, and then acquires the reconstruction information corresponding to the current block by adding the residual signal and the prediction signal.

Thus, the decoding of the current block is completed. Each current block is processed according to the flowchart shown in FIG. 13, such that an entire segment of video data is decoded.

It should be noted that in the embodiment of the present disclosure, due to adaptive adjustment of the priority of the transform pair based on the intra prediction mode or the shape information of the current block, as far as possible, the higher the probability of the transform pair is, the shorter the binarized codeword that needs to be coded is.

In the embodiment of the present disclosure, when performing coding, the coding device selects the transform pair based on the intra prediction mode of the current block or the shape information of the current block rather than a preset transform pair, and correspondingly the intra prediction mode of the current block or the shape information of the current block rather than the preset transform pair is adopted when decoding is performed. Thus, the coding and decoding performance can be improved.

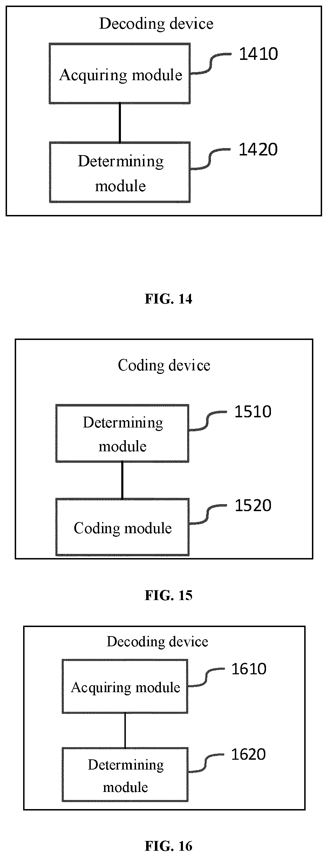

Based on the same technical concept, an embodiment of the present disclosure further provides a decoding device. As shown in FIG. 14, the decoding device includes: an acquiring module 1410, configured to acquire coded data of a current block, and acquire a transform pair index corresponding to the current block from the coded data, wherein a first bit of a binarized codeword corresponding to the transform pair index is decoded by context-based adaptive binary arithmetic coding based on one context model; and a determining module 1420, configured to determine, based on the transform pair index, a transform pair corresponding to the current block, wherein the transform pair includes a horizontal transform kernel and a vertical transform kernel.

In an exemplary embodiment of the present disclosure, the binarized codeword corresponding to the transform pair index includes a plurality of bits, wherein at least one of bits, except the first bit, among the plurality of bits is decoded by bypass binary arithmetic coding.

In an exemplary embodiment of the present disclosure, the determining module 1420 is configured to: determine, based on an intra prediction mode of the current block and the transform pair index, the transform pair corresponding to the current block; or determine, based on shape information of the current block and the transform pair index, the transform pair corresponding to the current block.

Based on the same technical concept, an embodiment of the present disclosure further provides a coding device. As shown in FIG. 15, the coding device includes: a determining module 1510, configured to determine a transform pair corresponding to a current block and a transform pair index corresponding to the current block; and a coding module 1520, configured to code the transform pair index by subjecting a first bit of a binarized codeword corresponding to the transform pair index to context-based adaptive binary arithmetic coding based on one context model, and add the coded transform pair index to coded data of the current block.

In an exemplary embodiment of the present disclosure, the coding module 1520 is configured to: code the first bit by the context-based adaptive binary arithmetic coding based on one context model and code at least one of bits, except the first bit, among a plurality of bits by bypass binary arithmetic coding if the binarized codeword corresponding to the transform pair index includes the plurality of bits; and add the coded transform pair index to the coded data.

In an exemplary embodiment of the present disclosure, the determining module 1510 is configured to: determine the transform pair corresponding to the current block, and determine, based on an intra prediction mode of the current block and the transform pair, the transform pair index corresponding to the current block; or determine the transform pair corresponding to the current block, and determine, based on shape information of the current block and the transform pair, the transform pair index corresponding to the current block.

In the embodiment of the present disclosure, when coding the current block, the coding device acquires the transform pair corresponding to the current block for coding, rather than directly acquiring a preset transform pair, such that the coding and decoding performance can be improved. When coding the binarized codeword corresponding to the transform pair index, the coding device codes the first bit in the binarized codeword corresponding to the transform pair index by one context model rather than a plurality of context models, such that the memory space can be saved. In addition, because the plurality of context models are not needed, the context does not need to be updated, which lowers the coding and decoding complexity.

Based on the same technical concept, an embodiment of the present disclosure further provides a decoding device. As shown in FIG. 16, the decoding device includes: an acquiring module 1610, configured to acquire coded data of a current block, and acquire a transform pair index from the coded data, wherein at least one of bits, except a first bit, among a plurality of bits is decoded by bypass binary arithmetic coding if a binarized codeword corresponding to the transform pair index includes the plurality of bits; and a determining module 1620, configured to determine, based on the transform pair index, a transform pair corresponding to the current block, wherein the transform pair includes a horizontal transform kernel and a vertical transform kernel.

In an exemplary embodiment of the present disclosure, a first bit of the binarized codeword corresponding to the transform pair index is decoded by context-based adaptive binary arithmetic coding based on one context model.

In an exemplary embodiment of the present disclosure, the determining module 1620 is configured to: determine, based on an intra prediction mode of the current block and the transform pair index, the transform pair corresponding to the current block; or determine, based on shape information of the current block and the transform pair index, the transform pair corresponding to the current block, wherein the transform pair includes a horizontal transform kernel and a vertical transform kernel.

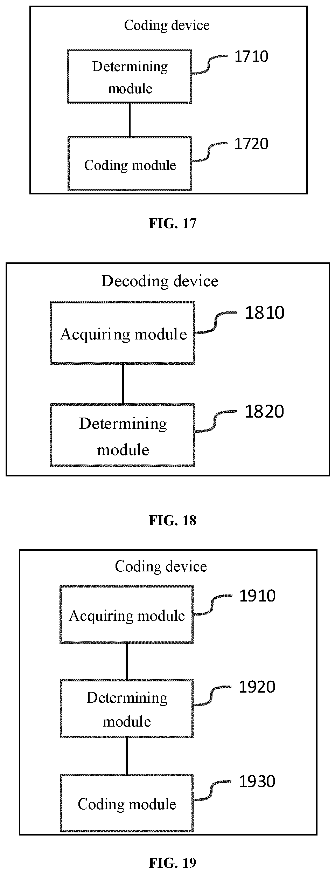

Based on the same technical concept, an embodiment of the present disclosure further provides a coding device. As shown in FIG. 17, the coding device includes: a determining module 1710, configured to determine a transform pair corresponding to a current block and a transform pair index corresponding to the current block; and a coding module 1720, configured to code at least one of bits, except a first bit, among a plurality of bits by bypass binary arithmetic coding if a binarized codeword corresponding to the transform pair index includes the plurality of bits, and add the coded transform pair index to coded data of the current block.

In an exemplary embodiment of the present disclosure, the coding module 1720 is further configured to: code the first bit by context-based adaptive binary arithmetic coding based on one context model.

In an exemplary embodiment of the present disclosure, the determining module 1710 is configured to: determine the transform pair corresponding to the current block, and determine, based on an intra prediction mode of the current block and the transform pair, the transform pair index corresponding to the current block; or determine the transform pair corresponding to the current block, and determine, based on shape information of the current block and the transform pair, the transform pair index corresponding to the current block.

In the embodiment of the present disclosure, when coding the current block, the coding device acquires the transform pair corresponding to the current block for coding, rather than directly acquiring a preset transform pair, such that the coding and decoding performance can be improved. When coding the transform pair index, the coding device codes the at least one of bits, except the first bit, in the binarized codeword corresponding to the transform pair index by the bypass binary arithmetic coding, and for the at least one bit, there is no need to store the context model. Thus, the memory space can be saved. In addition, for the at least one bit, the bypass binary arithmetic coding rather than CABAC is adopted, such that the coding and decoding complexity can also be lowered.

Based on the same technical concept, an embodiment of the present disclosure further provides a decoding device. As shown in FIG. 18, the decoding device includes: an acquiring module 1810, configured to acquire coded data of a current block, acquire a transform pair index from the coded data, and acquire an intra prediction mode of the current block or shape information of the current block; and a determining module 1820, configured to determine, based on the intra prediction mode of the current block and the transform pair index, a transform pair corresponding to the current block, or determine, based on the shape information of the current block and the transform pair index, the transform pair corresponding to the current block, wherein the transform pair includes a horizontal transform kernel and a vertical transform kernel.

In an exemplary embodiment of the present disclosure, the determining module 1820 is configured to: determine that the transform pair corresponding to the current block is a first transform pair if the transform pair index is a first index and a mode number of the intra prediction mode of the current block is less than or equal to a preset value; determine that the transform pair corresponding to the current block is a second transform pair if the transform pair index is a first index and the mode number of the intra prediction mode of the current block is greater than a preset value; determine that the transform pair corresponding to the current block is a second transform pair if the transform pair index is a second index and the mode number of the intra prediction mode of the current block is less than or equal to a preset value; or determine that the transform pair corresponding to the current block is a first transform pair if the transform pair index is a second index and the mode number of the intra prediction mode of the current block is greater than a preset value.

In an exemplary embodiment of the present disclosure, the determining module 1820 is configured to: determine that the transform pair corresponding to the current block is a first transform pair if the transform pair index is a first index and the shape information of the current block satisfies a preset shape constraint condition; determine that the transform pair corresponding to the current block is a second transform pair if the transform pair index is a first index and the shape information of the current block does not satisfy a preset shape constraint condition; determine that the transform pair corresponding to the current block is a second transform pair if the transform pair index is a second index and the shape information of the current block satisfies a preset shape constraint condition; or determine that the transform pair corresponding to the current block is a first transform pair if the transform pair index is a second index and the shape information of the current block does not satisfy a preset shape constraint condition.

In an exemplary embodiment of the present disclosure, wherein a first bit of a binarized codeword corresponding to the transform pair index is decoded by context-based adaptive binary arithmetic coding based on one context model.

In an exemplary embodiment of the present disclosure, the binarized codeword corresponding to the transform pair index includes a plurality of bits, wherein at least one of bits, except the first bit, among the plurality of bits is decoded by a bypass binary arithmetic coding.

Based on the same technical concept, an embodiment of the present disclosure further provides a coding device. As shown in FIG. 19, the coding device includes: an acquiring module 1910, configured to acquire an intra prediction mode of a current block and a transform pair corresponding to the current block, or acquire shape information of the current block and the transform pair corresponding to the current block; a determining module 1920, configured to determine, based on the intra prediction mode of the current block and the transform pair corresponding to the current block, a transform pair index corresponding to the current block, or determine, based on the shape information of the current block and the transform pair corresponding to the current block, the transform pair index corresponding to the current block; and a coding module 1930, configured to code the transform pair index and add the coded transform pair index to coded data of the current block.

In an exemplary embodiment of the present disclosure, the determining module 1920 is configured to: determine that the transform pair index corresponding to the current block is a first index if the transform pair is a first transform pair and a mode number of the intra prediction mode of the current block is less than or equal to a preset value; determine that the transform pair index corresponding to the current block is a first index if the transform pair is a second transform pair and a mode number of the intra prediction mode of the current block is greater than a preset value; determine that the transform pair index corresponding to the current block is a second index if the transform pair is a second transform pair and a mode number of the intra prediction mode of the current block is less than or equal to a preset value; or determine that the transform pair index corresponding to the current block is a second index if the transform pair is a first transform pair and a mode number of the intra prediction mode of the current block is greater than a preset value.

In an exemplary embodiment of the present disclosure, the determining module 1920 is configured to: determine that the transform pair index corresponding to the current block is a first index if the transform pair is a first transform pair and the shape information of the current block satisfies a preset shape constraint condition; determine that the transform pair index corresponding to the current block is a first index if the transform pair is a second transform pair and the shape information of the current block does not satisfy a preset shape constraint condition; determine that the transform pair index corresponding to the current block is a second index if the transform pair is a second transform pair and the shape information of the current block satisfies a preset shape constraint condition; or determine that the transform pair index corresponding to the current block is a second index if the transform pair is a first transform pair and the shape information of the current block does not satisfy a preset shape constraint condition.

In an exemplary embodiment of the present disclosure, the coding module 1930 is configured to: code the transform pair index by subjecting a first bit of a binarized codeword corresponding to the transform pair index to context-based adaptive binary arithmetic coding based on one context model.

In an exemplary embodiment of the present disclosure, the coding module 1930 is configured to: code at least one of bits, except the first bit, among a plurality of bits by bypass binary arithmetic coding if a binarized codeword corresponding to the transform pair index includes the plurality of bits.

In the embodiment of the present disclosure, when performing coding, the coding device selects the transform kernel based on the intra prediction mode of the current block or the shape information of the current block rather than a preset transform pair, and correspondingly the intra prediction mode of the current block or the shape information of the current block rather than the preset transform pair is also adopted when decoding is performed. Thus, the coding and decoding performance can be improved.

It should be noted that the decoding device according to the above embodiment only takes division of all the functional modules as an example for explanation when performing decoding. In practice, the functions can be implemented by different functional modules as required. That is, the decoding device includes different functional modules to implement all or part of the functions described above. In addition, the decoding device according to the above embodiment and the decoding method are based on the same concept, and a specific implementation process of the decoding device is detailed in the method embodiment and is not repeatedly described here.

It should be noted that the coding device according to the above embodiment only takes division of all the functional modules as an example for explanation when performing coding. In practice, the functions can be implemented by different functional modules as required. That is, the coding device includes different functional modules to implement all or part of the functions described above. In addition, the coding device according to the above embodiment and the coding method are based on the same concept, and a specific implementation process of the coding device is detailed in the method embodiment and is not repeatedly described here.

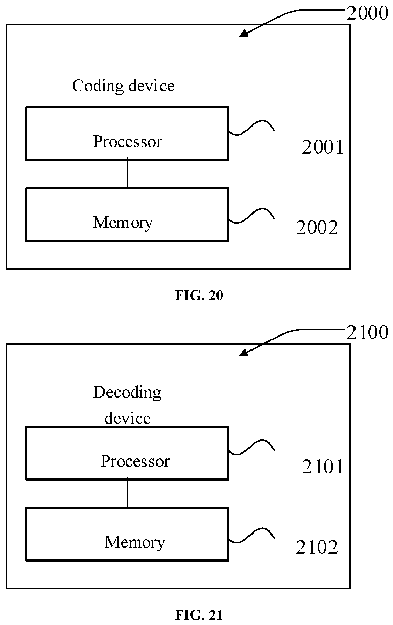

FIG. 20 is a structural diagram of yet still another coding device according to an embodiment of the present disclosure. The coding device 2000 may have relatively large differences due to different configurations or performance, and may include at least one processor 2001 and at least one memory 2002. The memory 2002 stores at least one instruction therein. The processor 2001, when loading and executing the at least one instruction, is caused to perform the steps of the coding method described above.

FIG. 21 is a structural diagram of yet still another decoding device according to an embodiment of the present disclosure. The decoding device 2100 may have relatively large differences due to different configurations or performance, and may include at least one processor 2101 and at least one memory 2102. The memory 2102 stores at least one instruction therein. The processor 2101, when loading and executing at least one instruction, is caused to perform the steps of the decoding method described above.

An embodiment of the present disclosure further provides a computer-readable storage medium. The storage medium stores a computer program therein. The computer program, when running by a processor, causes the processor to perform steps of the coding method and decoding method described above.

An embodiment of the present disclosure further provides a coding device. The coding device includes a processor and a memory. The memory is configured to a store a computer program. The processor, when running the program, is caused to perform the steps of the coding method described above.

An embodiment of the present disclosure further provides a decoding device. The decoding device includes a processor and a memory. The memory is configured to a store a computer program. The processor, when running the program stored, is caused to perform the steps of the decoding method described above.

An embodiment of the present disclosure further provides a coding and decoding system. The system includes a coding device and a decoding device.

The coding device is the coding device as described above.

The decoding device is the decoding device as described above.

A person of ordinary skill in the art may understand that all or part of the steps in the above embodiments may be performed by hardware, or relevant hardware instructed by a program, and the program may be stored in a computer-readable storage medium, such as a read-only memory, a disk, or an optical disc.

**Claims**

1. A decoding method, comprising:

   acquiring coded data of a current block;
   determining that a height and a width of the current block are both less than or equal to a preset threshold and the current block is a luma block;
   acquiring a transform pair index corresponding to the current block from the coded data, wherein in the case that the transform pair index comprises five index values, a transform pair mapped by the transform pair index is (DCT2, DCT2) in response to the index value of the transform pair index being a first index value; the transform pair mapped by the transform pair index is (DST7, DST7) in response to the index value of the transform pair index being a second index value; the transform pair mapped by the transform pair index is (DCT8, DST7) in response to the index value of the transform pair index being a third index value; the transform pair as mapped by the transform pair index is (DST7, DCT8) in response to the index value of the transform pair index being a fourth index value; and the transform pair mapped by the transform pair index is (DCT8, DCT8) in response to the index value of the transform pair index being a fifth index value; wherein a binarized codeword corresponding to the transform pair index occupies at most four bits and a first bit of the binarized codeword corresponding to the transform pair index is intended to indicate whether the transform pair mapped by the first index value is selected, wherein the transform pair (DCT2, DCT2) mapped by the first index value is selected in response to a value of the first bit being a first value, and the transform pair mapped by one of the remaining index values is selected in response to the value of the first bit being a second value; and wherein the first value is 0 and the second value is 1, the first bit of the binarized codeword corresponding to the transform pair index is decoded by context-based adaptive binary arithmetic coding based on one context model, other bits are decoded by context-based adaptive binary arithmetic coding (CABAC) in response to the binarized codeword corresponding to the transform pair index further comprising the other bits in addition to the first bit; and

determining the transform pair corresponding to the current block based on the transform pair index, wherein the transform pair comprises a horizontal transform kernel and a vertical transform kernel.

2. The decoding method according to claim 1, wherein determining the transform pair corresponding to the current block based on the transform pair index comprises:

determining, based on the transform pair index corresponding to the current block and a preconfigured corresponding relationship between the transform pair index and the transform pair, the transform pair corresponding to the current block, wherein the corresponding relationship comprises a mapping relationship between five index values of the transform pair index and five transform pairs.

3. The decoding method according to claim 1 or 2, wherein in response to the value of the first bit being the second value, the first bit is intended to indicate that the transform pair mapped by one of the remaining index values is selected, the transform pair mapped by one of the remaining index values being one of four transform pairs (DST7, DST7), (DCT8, DST7), (DST7, DCT8), and (DCT8, DCT8); wherein

a value of a second bit of the binarized codeword is intended to identify whether the transform pair selected by the current block is (DST7, DST7) or one of (DCT8, DST7), (DST7, DCT8), and (DCT8 DCT8);
a value of a third bit of the binarized codeword is intended to identify whether the transform pair selected by the current block is (DCT8, DST7) or one of (DST7, DCT8) and (DCT8, DCT8); and
a value of a fourth bit of the binarized codeword is intended to identify whether the transform pair selected by the current block is (DST7, DCT8) or (DCT8, DCT8).

4. The decoding method according to any preceding claim, wherein determining the transform pair corresponding to the current block based on the transform pair index comprises:

determining that the transform pair corresponding to the current block is (DCT2, DCT2) in response to the first bit being 0;
determining that the transform pair corresponding to the current block is (DST7, DST7) in response to the first bit being 1 and a second bit being 0;
determining that the transform pair corresponding to the current block is (DCT8, DST7) in response to the first bit being 1, the second bit being 1, and a third bit being 0;
determining that the transform pair corresponding to the current block is (DST7, DCT8) in response to the first bit being 1, the second bit being 1, the third bit being 1, and a fourth bit being 0; and
determining that the transform pair corresponding to the current block is (DCT8, DCT8) in response to the first bit being 1, the second bit being 1, the third bit being 1, and the fourth bit being 1.

5. The decoding method according to any preceding claim, wherein prior to acquiring the transform pair index corresponding to the current block from the coded data, the decoding method further comprises:
identifying whether the coded data from a coding device carries a target flag, wherein the target flag is intended to indicate that explicit multi-kernel transform is enabled.

6. The decoding method according to any preceding claim, wherein acquiring the transform pair index corresponding to the current block from the coded data comprises:

acquiring the transform pair index corresponding to the current block from the coded data in response to determining that the current block is the luma block and the height and the width of the current block are both less than or equal to 32; and

directly determining, instead of decoding the transform pair index corresponding to the current block, (DCT2, DCT2) as the transform pair selected by the current block in response to determining that the current block is not the luma block or the height or width of the current block is greater than 32.

7. The decoding method according to any preceding claim, wherein the first value of the first bit of the binarized codeword corresponding to the transform pair index is 0, and the second value of the first bit of the binarized codeword corresponding to the transform pair index is 1; and

the binarized codeword of the first index value is 0; the binarized codeword of the second index value is 10; the binarized codeword of the third index value is 110; the binarized codeword of the fourth index value is 1110; and the binarized codeword of the fifth index value is 1111.

8. A coding method, comprising:

determining that a height and a width of a current block are both less than or equal to a preset threshold and the current block is a luma block;

determining a transform pair corresponding to the current block and a transform pair index corresponding to the current block, wherein in the case that the transform pair index comprises five index values, the transform pair mapped by the transform pair index is (DCT2, DCT2) in response to the index value of the transform pair index being a first index value; the transform pair mapped by the transform pair index is (DST7, DST7) in response to the index value of the transform pair index being a second index value; the transform pair mapped by the transform pair index is (DCT8, DST7) in response to the index value of the transform pair index being a third index value; the transform pair mapped by the transform pair index is (DST7, DCT8) in response to the index value of the transform pair index being a fourth index value; and the transform pair mapped by the transform pair index is (DCT8, DCT8) in response to the index value of the transform pair index being a fifth index value; and wherein a binarized codeword corresponding to the transform pair index occupies at most four bits and a first bit of the binarized codeword corresponding to the transform pair index is intended to indicate whether the transform pair mapped by the first index value is selected, wherein the transform pair (DCT2, DCT2) mapped by the first index value is selected in response to a value of the first bit being a first value, and the transform pair mapped by one of the remaining index values is selected in response to the value of the first bit being a second value, the first value is 0 and the second value is 1; and

coding the transform pair index by subjecting the first bit of the binarized codeword corresponding to the transform pair index to context-based adaptive binary arithmetic coding based on one context model and subjecting other bits of the binarized codeword corresponding to the transform pair index to context-based adaptive binary arithmetic coding based on one context model in response to the binarized codeword corresponding to the transform pair index further comprising the other bits in addition to the first bit, and adding the transform pair index as coded to coded data of the current block.

9. The coding method according to claim 8, wherein determining the transform pair corresponding to the current block and the transform pair index corresponding to the current block comprises:

determining the transform pair corresponding to the current block; and

determining, based on the transform pair and a preconfigured corresponding relationship between the transform pair index and the transform pair, the transform pair index corresponding to the current block, wherein the corresponding relationship comprises a mapping relationship between five index values of the transform pair index and five transform pairs.

10. The coding method according to claim 8 or 9, wherein in response to the value of the first bit being the second value, the first bit is intended to indicate that the transform pair mapped by one of the remaining index values is selected, the transform pair mapped by one of the remaining index values being one of four transform pairs (DST7, DST7), (DCT8, DST7), (DST7, DCT8), and (DCT8, DCT8); wherein

a value of a second bit of the binarized codeword is intended to identify whether the transform pair selected by the current block is (DST7, DST7) or one of (DCT8, DST7), (DST7, DCT8) and (DCT8 DCT8);

a value of a third bit of the binarized codeword is intended to identify whether the transform pair selected by the current block is (DCT8, DST7) or one of (DST7, DCT8) and (DCT8, DCT8); and

a value of a fourth bit of the binarized codeword is intended to identify whether the transform pair selected by the current block is (DST7, DCT8) or (DCT8, DCT8);
and wherein the first bit of the binarized codeword is 0 in response to the transform pair corresponding to the current block being (DCT2, DCT2);
the first bit of the binarized codeword is 1 and the second bit is 0 in response to the transform pair corresponding to the current block being (DST7, DST7);
the first bit of the binarized codeword is 1, the second bit is 1, and the third bit is 0 in response to the transform pair corresponding to the current block being (DCT8, DST7);
the first bit of the binarized codeword is 1, the second bit is 1, the third bit is 1, and the fourth bit is 0 in response to the transform pair corresponding to the current block being (DST7, DCT8); and
the first bit of the binarized codeword is 1, the second bit is 1, the third bit is 1, and the fourth bit is 1 in response to the transform pair corresponding to the current block being (DCT8, DCT8).

11. A decoder, comprising a processor and a memory storing at least one instruction executable by the processor; wherein the processor, when loading and executing the at least one instruction, is caused to perform the decoding method as defined in any one of claims 1 to 7.

12. A coder, comprising a processor and a memory storing at least one instruction executable by the processor; wherein the processor, when loading and executing the at least one instruction, is caused to perform the coding method as defined in any one of claims 8 to 10.

13. A non-transitory computer-readable storage medium, storing at least one instruction executable by a processor; wherein the at least one instruction, when loaded and executed by the processor, causes the processor to perform the decoding method as defined in any one of claims 1 to 7 or the coding method as defined in any one of claims 8 to 10.

**Patentansprüche**

1. Decodierungsverfahren, umfassend:

Erfassen von codierten Daten eines gegenwärtigen Blocks;
Bestimmen, dass eine Höhe und eine Breite des gegenwärtigen Blocks beide kleiner als ein oder gleich einem im Voraus eingestellten Schwellenwert sind und der gegenwärtige Block ein Luma-Block ist;
Erfassen eines Transformationspaar-Index korrespondierend mit dem gegenwärtigen Block aus den codierten Daten, wobei in dem Fall, dass der Transformationspaar-Index fünf Indexwerte umfasst, ein durch den Transformationspaar-Index abgebildetes Transformationspaar (DCT2, DCT2) ist, als Reaktion darauf, dass der Indexwert des Transformationspaar-Index ein erster Indexwert ist; das durch den Transformationspaar-Index abgebildete Transformationspaar (DST7, DST7) ist, als Reaktion darauf, dass der Indexwert des Transformationspaar-Index ein zweiter Indexwert ist; das durch den Transformationspaar-Index abgebildete Transformationspaar (DCT8, DST7) ist, als Reaktion darauf, dass der Indexwert des Transformationspaar-Index ein dritter Indexwert ist; das Transformationspaar, wie durch den Transformationspaar-Index abgebildet, (DST7, DCT8) ist, als Reaktion darauf, dass der Indexwert des Transformationspaar-Index ein vierter Indexwert ist; und das durch den Transformationspaar-Index abgebildete Transformationspaar (DCT8, DCT8) ist, als Reaktion darauf, dass der Indexwert des Transformationspaar-Index ein fünfter Indexwert ist; wobei ein binarisiertes Codewort korrespondierend mit dem Transformationspaar-Index höchstens vier Bits belegt und ein erstes Bit des binarisierten Codeworts korrespondierend mit dem Transformationspaar-Index angeben soll, ob das durch den ersten Indexwert abgebildete Transformationspaar ausgewählt ist, wobei das durch den ersten Indexwert abgebildete Transformationspaar (DCT2, DCT2) als Reaktion darauf, dass ein Wert des ersten Bits ein erster Wert ist, ausgewählt wird, und das durch einen der restlichen Indexwerte abgebildete Transformationspaar als Reaktion darauf, dass der Wert des ersten Bits ein zweiter Wert ist, ausgewählt wird; und wobei der erste Wert 0 ist und der zweite Wert 1 ist, das erste Bit des binarisierten Codeworts korrespondierend mit dem Transformationspaar-Index durch kontextbasierte adaptive binäre arithmetische Codierung basierend auf einem Kontextmodell decodiert wird, andere Bits durch kontextbasierte adaptive binäre arithmetische Codierung (CABAC) als Reaktion darauf, dass das binarisierte Codewort korrespondierend mit dem Transformationspaar-Index ferner die anderen Bits zusätzlich zu dem ersten Bit umfasst, decodiert werden; und
Bestimmen des Transformationspaars korrespondierend mit dem gegenwärtigen Block basierend auf dem Transformationspaar-Index, wobei das Transformationspaar einen horizontalen Transformationskern und einen vertikalen Transformationskern umfasst.

2. Decodierungsverfahren nach Anspruch 1, wobei Bestimmen des Transformationspaars korrespondierend mit dem gegenwärtigen Block basierend auf dem Transformationspaar-Index umfasst:
Bestimmen, basierend auf dem Transformationspaar-Index korrespondierend mit dem gegenwärtigen Block und einem im Voraus konfigurierten korrespondierenden Verhältnis zwischen dem Transformationspaar-Index und dem Transformationspaar, des Transformationspaars korrespondierend mit dem gegenwärtigen Block, wobei das korrespondierende Verhältnis ein Abbildungsverhältnis zwischen fünf Indexwerten des Transformationspaar-Index und fünf Transformationspaaren umfasst.

3. Decodierungsverfahren nach Anspruch 1 oder 2, wobei als Reaktion darauf, dass der Wert des ersten Bits der zweite Wert ist, das erste Bit angeben soll, dass das durch einen der restlichen Indexwerte abgebildete Transformationspaar ausgewählt ist, das durch einen der restlichen Indexwerte abgebildete Transformationspaar eines von vier Transformationspaaren (DST7, DST7), (DCT8, DST7), (DST7, DCT8) und (DCT8, DCT8) ist; wobei

ein Wert eines zweiten Bits des binarisierten Codeworts identifizieren soll, ob das durch den gegenwärtigen Block ausgewählte Transformationspaar (DST7, DST7) oder eines von (DCT8, DST7), (DST7, DCT8) und (DCT8, DCT8) ist;
ein Wert eines dritten Bits des binarisierten Codeworts identifizieren soll, ob das durch den gegenwärtigen Block ausgewählte Transformationspaar (DCT8, DST7) oder eines von (DST7, DCT8) und (DCT8, DCT8) ist; und
ein Wert eines vierten Bits des binarisierten Codeworts identifizieren soll, ob das durch den gegenwärtigen Block ausgewählte Transformationspaar (DST7, DCT8) oder (DCT8, DCT8) ist.

4. Decodierungsverfahren nach einem der vorhergehenden Ansprüche, wobei das Bestimmen des Transformationspaars korrespondierend mit dem gegenwärtigen Block basierend auf dem Transformationspaar-Index umfasst:

Bestimmen, dass das Transformationspaar korrespondierend mit dem gegenwärtigen Block (DCT2, DCT2) ist, als Reaktion darauf, dass das erste Bit 0 ist;
Bestimmen, dass das Transformationspaar korrespondierend mit dem gegenwärtigen Block (DST7, DST7) ist, als Reaktion darauf, dass das erste Bit 1 ist und ein zweites Bit 0 ist;
Bestimmen, dass das Transformationspaar korrespondierend mit dem gegenwärtigen Block (DCT8, DST7) ist, als Reaktion darauf, dass das erste Bit 1 ist, das zweite Bit 1 ist und ein drittes Bit 0 ist;
Bestimmen, dass das Transformationspaar korrespondierend mit dem gegenwärtigen Block (DST7, DCT8) ist, als Reaktion darauf, dass das erste Bit 1 ist, das zweite Bit 1 ist, das dritte Bit 1 ist und ein viertes Bit 0 ist; und
Bestimmen, dass das Transformationspaar korrespondierend mit dem gegenwärtigen Block (DCT8, DCT8) ist, als Reaktion darauf, dass das erste Bit 1 ist, das zweite Bit 1 ist, das dritte Bit 1 ist und das vierte Bit 1 ist.

5. Decodierungsverfahren nach einem der vorhergehenden Ansprüche, wobei das Decodierungsverfahren vor dem Erfassen des Transformationspaar-Index korrespondierend mit dem gegenwärtigen Block aus den codierten Daten ferner umfasst:
Identifizieren, ob die codierten Daten von einer Codierungsvorrichtung eine Zielmarkierung tragen, wobei die Zielmarkierung angeben soll, dass explizite Mehrkern-Transformation aktiviert ist.

6. Decodierungsverfahren nach einem der vorhergehenden Ansprüche, wobei das Erfassen des Transformationspaar-Index korrespondierend mit dem gegenwärtigen Block aus den codierten Daten umfasst:

Erfassen des Transformationspaar-Index korrespondierend mit dem gegenwärtigen Block aus den codierten Daten als Reaktion darauf, dass Bestimmen, dass der gegenwärtige Block der Luma-Block ist und die Höhe und die Breite des gegenwärtigen Blocks beide kleiner als oder gleich 32 sind; und
direktes Bestimmen, anstelle von Decodieren des Transformationspaar-Index korrespondierend mit dem gegenwärtigen Block, von (DCT2, DCT2) als das durch den gegenwärtigen Block ausgewählte Transformationspaar als Reaktion auf Bestimmen, dass der gegenwärtige Block nicht der Luma-Block ist oder die Höhe oder Breite des gegenwärtigen Blocks größer als 32 ist.

7. Decodierungsverfahren nach einem der vorhergehenden Ansprüche, wobei der erste Wert des ersten Bits des binarisierten Codeworts korrespondierend mit dem Transformationspaar-Index 0 ist und der zweite Wert des ersten Bits des binarisierten Codeworts korrespondierend mit dem Transformationspaar-Index 1 ist; und
das binarisierte Codewort des ersten Indexwerts 0 ist; das binarisierte Codewort des zweiten Indexwerts 10 ist; das binarisierte Codewort des dritten Indexwerts 110 ist; das binarisierte Codewort des vierten Indexwerts 1110 ist; und das binarisierte Codewort des fünften Indexwerts 1111 ist.

8. Codierungsverfahren, umfassend:

Bestimmen, dass eine Höhe und eine Breite eines gegenwärtigen Blocks beide kleiner als ein oder gleich einem im Voraus eingestellten Schwellenwert sind und der gegenwärtige Block ein Luma-Block ist;

Bestimmen eines Transformationspaars korrespondierend mit dem gegenwärtigen Block und eines Transformationspaar-Index korrespondierend mit dem gegenwärtigen Block, wobei in dem Fall, dass der Transformationspaar-Index fünf Indexwerte umfasst, das durch den Transformationspaar-Index abgebildete Transformationspaar (DCT2, DCT2) ist, als Reaktion darauf, dass der Indexwert des Transformationspaar-Index ein erster Indexwert ist; das durch den Transformationspaar-Index abgebildete Transformationspaar (DST7, DST7) ist, als Reaktion darauf, dass der Indexwert des Transformationspaar-Index ein zweiter Indexwert ist; das durch den Transformationspaar-Index abgebildete Transformationspaar (DCT8, DST7) ist, als Reaktion darauf, dass der Indexwert des Transformationspaar-Index ein dritter Indexwert ist; das durch den Transformationspaar-Index abgebildete Transformationspaar (DST7, DCT8) ist, als Reaktion darauf, dass der Indexwert des Transformationspaar-Index ein vierter Indexwert ist; und das durch den Transformationspaar-Index abgebildete Transformationspaar (DCT8, DCT8) ist, als Reaktion darauf, dass der Indexwert des Transformationspaar-Index ein fünfter Indexwert ist; und wobei ein binarisiertes Codewort korrespondierend mit dem Transformationspaar-Index höchstens vier Bits belegt und ein erstes Bit des binarisierten Codeworts korrespondierend mit dem Transformationspaar-Index angeben soll, ob das durch den ersten Indexwert abgebildete Transformationspaar ausgewählt ist, wobei das durch den ersten Indexwert abgebildete Transformationspaar (DCT2, DCT2) als Reaktion darauf, dass ein Wert des ersten Bits ein erster Wert ist, ausgewählt wird, und das durch einen der restlichen Indexwerte abgebildete Transformationspaar als Reaktion darauf, dass der Wert des ersten Bits ein zweiter Wert ist, ausgewählt wird, wobei der erste Wert 0 ist und der zweite Wert 1 ist; und

Codieren des Transformationspaar-Index durch Unterziehen des ersten Bits des binarisierten Codeworts korrespondierend mit dem Transformationspaar-Index einer kontextbasierten adaptiven binären arithmetischen Codierung basierend auf einem Kontextmodell und Unterziehen von anderen Bits des binarisierten Codeworts korrespondierend mit dem Transformationspaar-Index einer kontextbasierten adaptiven binären arithmetischen Codierung basierend auf einem Kontextmodell als Reaktion darauf, dass das binarisierte Codewort korrespondierend mit dem Transformationspaar-Index ferner die anderen Bits zusätzlich zu dem ersten Bit umfasst, und Hinzufügen des Transformationspaar-Index als codiert zu codierten Daten des gegenwärtigen Blocks.

9. Codierungsverfahren nach Anspruch 8, wobei das Bestimmen des Transformationspaars korrespondierend mit dem gegenwärtigen Block und des Transformationspaar-Index korrespondierend mit dem gegenwärtigen Block umfasst:

Bestimmen des Transformationspaars korrespondierend mit dem gegenwärtigen Block; und

Bestimmen, basierend auf dem Transformationspaar und einem im Voraus konfigurierten korrespondierenden Verhältnis zwischen dem Transformationspaar-Index und dem Transformationspaar, des Transformationspaar-Index korrespondierend mit dem gegenwärtigen Block, wobei das korrespondierende Verhältnis ein Abbildungsverhältnis zwischen fünf Indexwerten des Transformationspaar-Index und fünf Transformationspaaren umfasst.

10. Codierungsverfahren nach Anspruch 8 oder 9, wobei als Reaktion darauf, dass der Wert des ersten Bits der zweite Wert ist, das erste Bit angeben soll, dass das durch einen der restlichen Indexwerte abgebildete Transformationspaar ausgewählt ist, das durch einen der restlichen Indexwerte abgebildete Transformationspaar eines von vier Transformationspaaren (DST7, DST7), (DCT8, DST7), (DST7, DCT8) und (DCT8, DCT8) ist; wobei

ein Wert eines zweiten Bits des binarisierten Codeworts identifizieren soll, ob das durch den gegenwärtigen Block ausgewählte Transformationspaar (DST7, DST7) oder eines von (DCT8, DST7), (DST7, DCT8) und (DCT8, DCT8) ist;

ein Wert eines dritten Bits des binarisierten Codeworts identifizieren soll, ob das durch den gegenwärtigen Block ausgewählte Transformationspaar (DCT8, DST7) oder eines von (DST7, DCT8) und (DCT8, DCT8) ist; und

ein Wert eines vierten Bits des binarisierten Codeworts identifizieren soll, ob das durch den gegenwärtigen Block ausgewählte Transformationspaar (DST7, DCT8) oder (DCT8, DCT8) ist;

und wobei das erste Bit des binarisierten Codeworts 0 ist, als Reaktion darauf, dass das Transformationspaar korrespondierend mit dem gegenwärtigen Block (DCT2, DCT2) ist;

das erste Bit des binarisierten Codeworts 1 ist und das zweite Bit 0 ist, als Reaktion darauf, dass das Transformationspaar korrespondierend mit dem gegenwärtigen Block (DST7, DST7) ist;

das erste Bit des binarisierten Codeworts 1 ist, das zweite Bit 1 ist und das dritte Bit 0 ist, als Reaktion darauf, dass das Transformationspaar korrespondierend mit dem gegenwärtigen Block (DCT8, DST7) ist;

das erste Bit des binarisierten Codeworts 1 ist, das zweite Bit 1 ist, das dritte Bit 1 ist und das vierte Bit 0 ist, als Reaktion darauf, dass das Transformationspaar korrespondierend mit dem gegenwärtigen Block (DST7, DCT8) ist; und

das erste Bit des binarisierten Codeworts 1 ist, das zweite Bit 1 ist, das dritte Bit 1 ist und das vierte Bit 1 ist, als Reaktion darauf, dass das Transformationspaar korrespondierend mit dem gegenwärtigen Block (DCT8, DCT8) ist.

11. Decodierer, umfassend einen Prozessor und einen Speicher, der mindestens eine Anweisung speichert, die durch den Prozessor ausführbar ist; wobei der Prozessor, wenn er die mindestens eine Anweisung lädt und ausführt, veranlasst wird, das Decodierungsverfahren, wie in einem der Ansprüche 1 bis 7 definiert, durchzuführen.

12. Codierer, umfassend einen Prozessor und einen Speicher, der mindestens eine Anweisung speichert, die durch den Prozessor ausführbar ist; wobei der Prozessor, wenn er die mindestens eine Anweisung lädt und ausführt, veranlasst wird, das Codierungsverfahren, wie in einem der Ansprüche 8 bis 10 definiert, durchzuführen.

13. Nichttransitorisches computerlesbares Speichermedium, das mindestens eine Anweisung speichert, die durch einen Prozessor ausführbar ist, wobei die mindestens eine Anweisung, wenn sie durch den Prozessor geladen und ausgeführt wird, den Prozessor veranlasst, das Decodierungsverfahren, wie in einem der Ansprüche 1 bis 7 definiert, oder das Codierungsverfahren, wie in einem der Ansprüche 8 bis 10 definiert, durchzuführen.

**Revendications**

1. Procédé de décodage, comprenant :

l'acquisition de données codées d'un bloc actuel ;
la détermination qu'une hauteur et une largeur du bloc actuel sont inférieures ou égales à un seuil prédéfini et que le bloc actuel est un bloc de luminance ;
l'acquisition d'un indice de paire de transformées correspondant au bloc actuel à partir des données codées, dans lequel dans le cas où l'indice de paire de transformées comprend cinq valeurs d'indice, une paire de transformées mappée par l'indice de paire de transformées est (DCT2, DCT2) lorsque la valeur d'indice de l'indice de paire de transformées est une première valeur d'indice ; la paire de transformées mappée par l'indice de paire de transformées est (DST7, DST7) lorsque la valeur d'indice de l'indice de paire de transformées est une deuxième valeur d'indice ; la paire de transformées mappée par l'indice de paire de transformées est (DCT8, DST7) lorsque la valeur d'indice de l'indice de paire de transformées est une troisième valeur d'indice ; la paire de transformées telle que mappée par l'indice de paire de transformées est (DST7, DCT8) lorsque la valeur d'indice de l'indice de paire de transformées est une quatrième valeur d'indice ; et la paire de transformées mappée par l'indice de paire de transformées est (DCT8, DCT8) lorsque la valeur d'indice de l'indice de paire de transformées est une cinquième valeur d'indice ; dans lequel un mot de code binarisé correspondant à l'indice de paire de transformées occupe au plus quatre bits et un premier bit du mot de code binarisé correspondant à l'indice de paire de transformées est destiné à indiquer que la paire de transformées mappée par la première valeur d'indice est sélectionnée ou non, dans lequel la paire de transformées (DCT2, DCT2) mappée par la première valeur d'indice est sélectionnée lorsqu'une valeur du premier bit est une première valeur, et la paire de transformées mappée par l'une des valeurs d'indice restantes est sélectionnée lorsque la valeur du premier bit est une deuxième valeur ; et dans lequel la première valeur est 0 et la deuxième valeur est 1, le premier bit du mot de code binarisé correspondant à l'indice de paire de transformées est décodé par un codage arithmétique binaire adaptatif basé sur le contexte basé sur un modèle de contexte, les autres bits sont décodés par un codage arithmétique binaire adaptatif basé sur le contexte (CABAC) lorsque le mot de code binarisé correspondant à l'indice de paire de transformées comprend en outre les autres bits en plus du premier bit ; et la détermination de la paire de transformées correspondant au bloc actuel en fonction de l'indice de paire de transformées, dans lequel la paire de transformées comprend un noyau de transformée horizontal et un noyau de transformée vertical.

2. Procédé de décodage selon la revendication 1, dans lequel la détermination de la paire de transformées correspondant au bloc actuel en fonction de l'indice de paire de transformées comprend :
la détermination, lorsque l'indice de paire de transformées correspond au bloc actuel et en fonction d'une relation correspondante entre l'indice de paire de transformées et la paire de transformées, de la paire de transformées correspondant au bloc actuel, dans lequel la relation correspondante comprend une relation de mappage entre cinq valeurs d'indice de l'indice de paire de transformées et cinq paires de transformées.

3. Procédé de décodage selon la revendication 1 ou 2, dans lequel, lorsque la valeur du premier bit est la deuxième valeur, le premier bit est destiné à indiquer que la paire de transformées mappée par l'une des valeurs d'indice restantes est sélectionnée, la paire de transformées mappée par l'une des valeurs d'indice restantes étant l'une de quatre paires de transformées (DST7, DST7), (DCT8, DST7), (DST7, DCT8) et (DCT8, DCT8) ; dans lequel

   une valeur d'un deuxième bit du mot de code binarisé est destinée à identifier que la paire de transformées sélectionnée par le bloc actuel est (DST7, DST7) ou l'une des (DCT8, DST7), (DST7, DCT8) et (DCT8 DCT8) ;
   une valeur d'un troisième bit du mot de code binarisé est destinée à identifier que la paire de transformées sélectionnée par le bloc actuel est (DCT8, DST7) ou l'une des (DST7, DCT8) et (DCT8, DCT8) ; et
   une valeur d'un quatrième bit du mot de code binarisé est destinée à identifier que la paire de transformées sélectionnée par le bloc actuel est (DST7, DCT8) ou (DCT8, DCT8).

4. Procédé de décodage selon toute revendication précédente, dans lequel la détermination de la paire de transformées correspondant au bloc actuel en fonction de l'indice de paire de transformées comprend :

   la détermination que la paire de transformées correspondant au bloc actuel est (DCT2, DCT2) lorsque le premier bit est 0 ;
   la détermination que la paire de transformées correspondant au bloc actuel est (DST7, DST7) lorsque le premier bit est 1 et le deuxième est 0 ;
   la détermination que la paire de transformées correspondant au bloc actuel est (DCT8, DST7) lorsque le premier bit est 1, le deuxième bit est 1 et le troisième bit est 0 ;
   la détermination que la paire de transformées correspondant au bloc actuel est (DST7, DCT8) lorsque le premier bit est 1, le deuxième bit est 1, le troisième bit est 1 et le quatrième bit est 0 ; et
   la détermination que la paire de transformées correspondant au bloc actuel est (DCT8, DCT8) lorsque le premier bit est 1, le deuxième bit est 1, le troisième bit est 1 et le quatrième bit est l.

5. Procédé de décodage selon toute revendication précédente, dans lequel, le procédé de décodage comprenant en outre, avant l'acquisition de l'indice de paire de transformées correspondant au bloc actuel à partir des données codées :
   l'identification que les données codées d'un dispositif de codage convoient ou non un fanion cible, dans lequel le fanion cible est destiné à indiquer qu'une transformation multi-noyaux explicite est activée.

6. Procédé de décodage selon toute revendication précédente, dans lequel l'acquisition de l'indice de paire de transformées correspondant au bloc actuel à partir des données codées comprend :

   l'acquisition de l'indice de paire de transformées correspondant au bloc actuel à partir des données codées lorsque la détermination que le bloc actuel est le bloc de luminance et que la hauteur et la largeur du bloc actuel sont toutes deux inférieures ou égales à 32 ; et
   la détermination directe, au lieu de son décodage, de l'indice de paire de transformées correspondant au bloc actuel, (DCT2, DCT2) comme paire de transformées sélectionnée par le bloc actuel lorsque la détermination que le bloc actuel n'est pas le bloc de luminance ou que la hauteur ou la largeur du bloc actuel est supérieure à 32.

7. Procédé de décodage selon toute revendication précédente, dans lequel la première valeur du premier bit du mot de code binarisé correspondant à l'indice de paire de transformées est 0, et la deuxième valeur du premier bit du mot de code binarisé correspondant à l'indice de paire de transformées est 1 ; et
   le mot de code binarisé de la première valeur d'indice est 0 ; le mot de code binarisé de la deuxième valeur d'indice est 10 ; le mot de code binarisé de la troisième valeur d'indice est 110 ; le mot de code binarisé de la quatrième valeur d'indice est 1110 ; et le mot de code binarisé de la cinquième valeur d'indice est 1111.

8. Procédé de codage, comprenant :

   la détermination qu'une hauteur et une largeur d'un bloc actuel sont inférieures ou égales à un seuil prédéfini et que le bloc actuel est un bloc de luminance ;
   la détermination d'une paire de transformées correspondant au bloc actuel et d'un indice de paire de transformées correspondant au bloc actuel, dans lequel, dans le cas où l'indice de paire de transformées comprend cinq valeurs d'indice, la paire de transformées mappée par l'indice de paire de transformées est (DCT2, DCT2) lorsque la valeur d'indice de l'indice de paire de transformées est une première valeur d'indice ; la paire de transformées mappée par l'indice de paire de transformées est (DST7, DST7) lorsque la valeur d'indice de l'indice de paire de transformées est une deuxième valeur d'indice ; la paire de transformées mappée par l'indice de paire de transformées est (DCT8, DST7) lorsque la valeur d'indice de l'indice de paire de transformées est une troisième valeur d'indice ; la paire de transformées mappée par l'indice de paire de transformées est (DST7, DCT8) lorsque la valeur d'indice de l'indice de paire de transformées est une quatrième valeur d'indice ; et la paire de transformées mappée par l'indice de paire de transformées est (DCT8, DCT8) lorsque la valeur d'indice de l'indice de paire de transformées est une cinquième valeur d'indice ; et dans lequel un mot de code binarisé correspondant à l'indice de paire de transformées occupe au plus quatre bits et un premier bit du mot de code binarisé correspondant à l'indice de paire de transformées est destiné à indiquer que la paire de transformées mappée par la première valeur d'indice est sélectionnée ou non, dans lequel la paire de transformées (DCT2, DCT2) mappée par la première valeur d'indice est sélectionnée lorsqu'une valeur du premier bit est une première valeur, et la paire de transformées mappée par l'une des valeurs d'indice restantes est sélectionnée lorsque la valeur du premier bit est une deuxième valeur, la première valeur est 0 et la deuxième valeur est 1 ; et le codage de l'indice de paire de transformées en soumettant le premier bit du mot de code binarisé correspondant à l'indice de paire de transformées à un codage arithmétique binaire adaptatif basé sur le contexte basé sur un modèle de contexte et en soumettant d'autres bits du mot de code binarisé correspondant à l'indice de paire de transformées à un codage arithmétique binaire adaptatif basé sur le contexte basé sur un modèle de contexte lorsque le mot de code binarisé correspondant à l'indice de paire de transformées comprend en outre les autres bits en plus du premier bit, et l'ajout de l'indice de paire de transformées codé aux données codées du bloc actuel.

9. Procédé de codage selon la revendication 8, dans lequel la détermination de la paire de transformées correspondant au bloc actuel et de l'indice de paire de transformées correspondant au bloc actuel comprend :

   la détermination de la paire de transformées correspondant au bloc actuel ; et
   la détermination, en fonction de la paire de transformées et d'une relation correspondante préconfigurée entre l'indice de paire de transformées et la paire de transformées, de l'indice de paire de transformées correspondant au bloc actuel, dans lequel la relation correspondante comprend une relation de mappage entre cinq valeurs d'indice de l'indice de paire de transformées et cinq paires de transformées.

10. Procédé de codage selon la revendication 8 ou 9, dans lequel, lorsque la valeur du premier bit est la deuxième valeur, le premier bit est destiné à indiquer que la paire de transformées mappée par l'une des valeurs d'indice restantes est sélectionnée, la paire de transformées mappée par l'une des valeurs d'indice restantes étant l'une des quatre paires de transformées (DST7, DST7), (DCT8, DST7), (DST7, DCT8) et (DCT8, DCT8) ; dans lequel

   une valeur d'un deuxième bit du mot de code binarisé est destinée à identifier que la paire de transformées sélectionnée par le bloc actuel est (DST7, DST7) ou l'une des (DCT8, DST7), (DST7, DCT8) et (DCT8 DCT8) ;
   une valeur d'un troisième bit du mot de code binarisé est destinée à identifier que la paire de transformées sélectionnée par le bloc actuel est (DCT8, DST7) ou l'une des (DST7, DCT8) et (DCT8, DCT8) ; et
   une valeur d'un quatrième bit du mot de code binarisé est destinée à identifier que la paire de transformées sélectionnée par le bloc actuel est (DST7, DCT8) ou (DCT8, DCT8) ;
   et dans lequel le premier bit du mot de code binarisé est 0 lorsque la paire de transformées correspondant au bloc actuel est (DCT2, DCT2) ;
   le premier bit du mot de code binarisé est 1 et le deuxième bit est 0 lorsque la paire de transformées correspondant au bloc actuel est (DST7, DST7) ;
   le premier bit du mot de code binarisé est 1, le deuxième bit est 1 et le troisième bit est 0 lorsque la paire de transformées correspondant au bloc actuel est (DCT8, DST7) ;
   le premier bit du mot de code binarisé est 1, le deuxième bit est 1, le troisième bit est 1 et le quatrième bit est 0 lorsque la paire de transformées correspondant au bloc actuel est (DST7, DCT8) ; et
   le premier bit du mot de code binarisé est 1, le deuxième bit est 1, le troisième bit est 1 et le quatrième bit est 1 lorsque la paire de transformées correspondant au bloc actuel est (DCT8, DCT8).

11. Décodeur, comprenant un processeur et une mémoire stockant au moins une instruction exécutable par le processeur ; dans lequel le processeur, lors du chargement et de l'exécution de l'au moins une instruction, est amené à réaliser le procédé de décodage selon l'une quelconque des revendications 1 à 7.

12. Codeur, comprenant un processeur et une mémoire stockant au moins une instruction exécutable par le processeur ; dans lequel le processeur, lors du chargement et de l'exécution de l'au moins une instruction, est amené à réaliser le procédé de codage selon l'une quelconque des revendications 8 à 10.

13. Support de stockage non transitoire lisible par ordinateur, stockant au moins une instruction exécutable par un processeur ; dans lequel l'au moins une instruction, lorsqu'elle est chargée et exécutée par le processeur, amène le processeur à réaliser le procédé de décodage selon l'une quelconque des revendications 1 à 7 ou le procédé de codage selon l'une quelconque des revendications 8 à 10.

(a)  (b)  (c)  (d)  (e)  (f)

**FIG. 1**

**FIG. 2**

(a)  (b)  (c)

**FIG. 3**

**FIG. 4**

**FIG. 5**

FIG. 6

FIG. 7

Acquiring, by a coding device, a residual signal of a current block — 801

Determining, by the coding device, a transform pair corresponding to the current block and a transform pair index corresponding to the current block — 802

Acquiring, by the coding device, coded data of the current block by coding the residual signal of the current block based on the transform pair — 803

Coding, by the coding device, the transform pair index by subjecting a first bit of a binarized codeword corresponding to the transform pair index to context-based adaptive binary arithmetic coding based on one context model, and adding, by the coding device, the coded transform pair index to the coded data of the current block — 804

**FIG. 8**

Acquiring, by a decoding device, coded data of a current block — 901

Acquiring, by the decoding device, a transform pair index corresponding to the current block from the coded data, wherein a first bit of a binarized codeword corresponding to the transform pair index is decoded by context-based adaptive binary arithmetic decoding based on one context model — 902

Determining, by the decoding device, a transform pair corresponding to the current block based on the transform pair index, wherein the transform pair includes a horizontal transform kernel and a vertical transform kernel — 903

Acquiring, by the decoding device, reconstruction information corresponding to the current block by decoding the current block based on the transform pair — 904

**FIG. 9**

```
┌─────────────────────────────────────────────────────────────────┐
│                                                                   │  ⟋ 1001
│    Acquiring, by a coding device, a residual signal of a          │
│                      current block                                │
└─────────────────────────────────────────────────────────────────┘
                              │
                              ▼
┌─────────────────────────────────────────────────────────────────┐
│                                                                   │  ⟋ 1002
│ Determining, by the coding device, a transform pair corresponding │
│ to the current block and a transform pair index corresponding to  │
│                       the current block                           │
└─────────────────────────────────────────────────────────────────┘
                              │
                              ▼
┌─────────────────────────────────────────────────────────────────┐
│                                                                   │  ⟋ 1003
│ Acquiring, by the coding device, coded data corresponding to the  │
│ current block by coding the residual signal of the current block  │
│               based on the transform pair                         │
└─────────────────────────────────────────────────────────────────┘
                              │
                              ▼
┌─────────────────────────────────────────────────────────────────┐
│                                                                   │  ⟋ 1004
│   Coding, by the coding device, at least one of bits, except a    │
│   first bit, among a plurality of bits by bypass binary           │
│ arithmetic coding if a binarized codeword corresponding to the    │
│ transform pair index includes the plurality of bits, and adding,  │
│ by the coding device, the coded transform pair index to the coded │
│          data of the current block                                │
└─────────────────────────────────────────────────────────────────┘
```

**FIG. 10**

Acquiring, by a decoding device, coded data of a current block ⌐1101

Acquiring, by the decoding device, a transform pair index from the coded data, wherein at least one of bits, except a first bit, among a plurality of bits is decoded by bypass binary arithmetic coding if a binarized codeword corresponding to the transform pair index includes the plurality of bits ⌐1102

Determining, by the decoding device, a transform pair corresponding to the current block based on the transform pair index, wherein the transform pair includes a horizontal transform kernel and a vertical transform kernel ⌐1103

Acquiring, by the decoding device, reconstruction information corresponding to the current block by decoding the current block based on the transform pair ⌐1104

**FIG. 11**

Acquiring, by a coding device, a residual signal of a current block — 1201

Acquiring, by the coding device, an intra prediction mode of the current block and a transform pair corresponding to the current block, or acquiring, by the coding device, shape information of the current block and the transform pair corresponding to the current block — 1202

Determining, by the coding device, a transform pair index corresponding to the current block based on the intra prediction mode of the current block and the transform pair corresponding to the current block, or determining, by the coding device, the transform pair index corresponding to the current block based on the shape information of the current block and the transform pair corresponding to the current block — 1203

Acquiring, by the coding device, coded data corresponding to the current block by coding the residual signal of the current block based on the transform pair — 1204

Coding, by the coding device, the transform pair index and adding, by the coding device, the coded transform pair index to the coded data of the current block — 1205

**FIG. 12**

Acquiring, by a decoding device, coded data of a current block
— 1301

Acquiring, by the decoding device, a transform pair index from the coded data, and acquiring, by the decoding device, an intra prediction mode of the current block or shape information of the current block
— 1302

Determining, by the decoding device, a transform pair corresponding to the current block based on the intra prediction mode of the current block and the transform pair index; or determining, by the decoding device, the transform pair corresponding to the current block based on the shape information of the current block and the transform pair index, wherein the transform pair includes a horizontal transform kernel and a vertical transform kernel
— 1303

Acquiring, by the decoding device, reconstruction information corresponding to the current block by decoding the current block based on the transform pair
— 1304

**FIG. 13**

**FIG. 14**

**FIG. 15**

**FIG. 16**

**FIG. 17**

**FIG. 18**

**FIG. 19**

2000

Coding device

Processor 2001

Memory 2002

**FIG. 20**

2100

Decoding
device

Processor 2101

Memory 2102

**FIG. 21**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BROSS et al.** Non-CE8: Unified Transform Type Signalling and Residual Coding for Transform Skip. *JVET Marrakech meeting,* 09 January 2019